# EUROPÄISCHE PATENTANMELDUNG

(11) **EP 2 039 481 A1**
(43) Veröffentlichungstag der Anmeldung: **25.03.2009**
(21) Anmeldenummer: 08021061.0
(22) Anmeldetag: 04.10.2005
(51) Int. Cl.: B25J 17/02

(54) **Gelenkarm für Roboter, Hebezeuge, Kräne u.dgl.**

(30) Priorität: 11.10.2004 AT 16942004; 11.10.2004 AT 16952004; 12.10.2004 AT 17022004; 26.04.2005 AT 7012005; 19.05.2005 AT 8612005
(62) Teilanmeldung aus: 05790667.9
(71) Anmelder: Ehrenleitner, Franz, 4905 Thomasroith (AT)
(72) Erfinder: Ehrenleitner, Franz, 4905 Thomasroith (AT)
(74) Vertreter: Patentanwälte BARGER, PISO & PARTNER

(57) **Zusammenfassung**

Die Erfindung betrifft einen Gelenkarm (101) bzw. Knickarm für Roboter, Hebezeuge, Kräne u.dgl., mit einer festen Plattform (102), einer Zwischenplattform (104) und einer beweglichen Plattform (103), mit einer ersten Kinematik (105), die die feste Plattform mit der Zwischenplattform verbindet und mit einer zweiten Kinematik (106), die die Zwischenplattform mit der beweglichen Plattform verbindet.

Die Erfindung ist dadurch gekennzeichnet, dass zumindest eine der beiden Kinematiken eine Parallelkinematik ist, und dass die Parallelkinematik als Verbindungselemente Aktuatoren, das heißt: Stäbe veränderlicher Länge oder Stäbe konstanter Länge mit veränderlicher Lage ihres Fußpunktes, gegebenenfalls teilweise passive Stäbe, das heißt: Stäbe konstanter Länge mit fest auf der festen Plattform angeordneten Fußpunkten, und gegebenenfalls Zugmittel, das heißt: Seile, Ketten, etc., aufweist, und dass drei Verbindungselemente in Form eines Pseudo-Tripelpunktes an einem gemeinsamen Punkt der beweglichen Plattform (103) oder der Zwischenplattform (104) angreifen, wobei der Pseudo-Tripelpunkt bestimmten Definitionen genügt.

## Beschreibung

Die Erfindung betrifft einen Gelenkarm bzw. Knickarm für Roboter, Hebezeuge, Kräne u.dgl., mit einer festen Plattform, einer Zwischenplattform und einer beweglichen Plattform, mit einer ersten Kinematik, die die feste Plattform mit der Zwischenplattform verbindet und mit einer zweiten Kinematik, die die Zwischenplattform mit der beweglichen Plattform verbindet, entsprechend dem Oberbegriff des Anspruches 1.

Eine ähnliche Vorrichtung ist aus der WO 03/004223 A, ein umfangreiches Pamphlet, bekannt. Sie offenbart eine ganz erstaunliche Vorrichtung, nämlich eine zentralsymmetrische, parallele Stabkinematik, die durch Fußpunktverschiebung betätigt wird. Zusätzlich weist das dargestellte Ausführungsbeispiel auf der beweglichen Plattform einen Drehmechanismus für eine Werkzeugplattform auf, dieser seriell ausgebildete Drehmechanismus wird durch eine Drehstange und einen Motor über eine entsprechende Kupplung betätigt. Es wird auch auf die Möglichkeit eingegangen, kinematisch überbestimmte Systeme zu verwenden und Fußpunktmechanismen in Kombination mit längenveränderlichen Aktuatoren einzusetzen. Der Aufbau dieser Vorrichtung ist folgender: An der festen Plattform sind zentralsymmetrisch sechs vertikale Schienen für die Verschiebung der Fußpunkte vorgesehen. Drei Stäbe sind länger, drei kürzer ausgebildet, die kürzeren greifen an einem "tiefer" liegenden Bereich der beweglichen Plattform an und sind um 60° bezüglich der längern Stäbe versetzt.

Damit erreicht man eine im wesentlichen entlang der Zentralachse verfahrbare bewegliche Plattform, was auch durch die Fig. 4 dieser Druckschrift belegt wird. Diese zeigt die Anordnung der oben beschriebenen Konfiguration, um sie beweglicher zu gestalten, auf einer Stuartplattform, somit die serielle Kopplung zweier Parallelkinematiken. Es wird aber bei dieser Ausführungsform interessanterweise die Bewegung der einen Parallelkinematik überhaupt nicht zur Bewegung der anderen verwendet, d.h. die gesamte Bewegung der zweiten Parallelkinematik erfolgt von sich heraus auf der Zwischenplattform, sodass hier eigentlich nur eine Aggregation und keine Kombination vorliegt.

Im Hinblick auf den einfachen und modularen Aufbau, aber auch für die anderen günstigen Eigenschaften der Parallelkinematik wird auf den sogenannten DELTA-Roboter, das Hexapod und den IRB 940 Tricept verwiesen.

Eine besondere Art der Kinematik, die nicht unter die Parallelkinematik fällt, aber wegen ihrer Weiterentwicklung genannt werden soll, ist aus der Praxis bekannt: Es handelt sich um einen Roboter mit einer um eine vertikale Achse drehbaren "festen Plattform". Auf dieser festen Plattform ist, um eine horizontale Achse mittels eines Motors schwenkbar, ein im wesentlichen zwischen vertikaler Lage und fast horizontaler Lage verschwenkbarer Tragarm angeordnet, an dessen freiem Ende ein Werkzeughalter um eine zur genannten horizontalen Achse parallele Achse verschwenkbar montiert ist. Bei üblichen Robotern dieses Aufbaues, beispielsweise von KUKA, ist ein Stellmotor zwischen Arm und Werkzeughalter vorgesehen, der die Winkellage bestimmt.

Beim einem ähnlichen vorbekannten Roboter von ABB ist zur Vermeidung der Anordnung des Gewichtes des Stellmotors am bewegten Werkzeughalter der Stellmotor am unteren Ende des Armes angeordnet und betätigt über einen Radialstummel einen Stellarm, der parallel zum Tragarm verläuft und an passender Stelle des Werkzeughalters gelenkig angreift. Dadurch könnten der Stellarm und der Tragarm als Stäbe und der Werkzeughalter als bewegliche Plattform angesehen werden, wobei aber die Bewegung und Positionierung durch reine Drehmomentbelastung der Stäbe (zu der dann noch die eigentliche Last als Druck- bzw. Biegebelastung kommt) erreicht wird, sodass hier trotz der Stäbe und der Art ihrer Anordnung eine rotatorische Parallelkinematik (wenn überhaupt eine Parallelkinematik), vorliegt.

Ausgehend von diesem Stand der Technik ist es Ziel der Erfindung, eine Parallelkinematik für einen Gelenkarm bzw. Knickarm für Roboter, Hebezeuge, Kräne u.dgl. zu schaffen, die auf der Kombination von Aktuatoren (durch Fusspunktverschiebung wirkende Stäbe konstanter Länge oder längenveränderliche Stäbe, gegebenenfalls auch längenveränderliche Seile oder andere Zugmittel) und passiven Stäben beruht, wobei insbesondere die Probleme der komplexen Steuerung und der Lagerung vermieden oder zumindest deutlich reduziert werden soll.

Erfindungsgemäß geschieht dies durch die im kennzeichnenden Teil des Anspruches 1 angegebenen Merkmale, die Unteransprüche betreffen vorteilhafte Ausgestaltungen und Weiterbildungen.

Eine derartige vorteilhafte Weiterbildung der Erfindung besteht darin, eine sogenannte überdefinierte bzw. überbestimmte Kinematik zu verwenden. Damit erreicht man eine Erhöhung der Steifigkeit der Vorrichtung, kann die bewegliche Plattform, was oft günstig ist, leichter und damit weniger steif bauen, weil sie durch die überbestimmte Fixierung stabilisiert wird und weil dies, zumindest in einem gewissem Ausmaß, notwendig ist, um die Toleranzen der überbestimmten Führung auszugleichen und so Beschädigungen der Lager bzw. der Aktuatoren (Antriebe, Getriebe und ausführende Organe in ihrer Gesamtheit) zu verhindern.

Eine weitere vorteilhafte Variante der Erfindung, die mit der vorstehend genannten nicht in Widerspruch steht, besteht darin, durch Lager für einzelne Stäbe, die keine allseitige Bewegung zulassen (Kardangelenk statt sphärischer Lagerung), Stäbe "einzusparen" und dafür Biegebeanspruchungen in Kauf zu nehmen. Diese zusätzliche mechanische Beanspruchung ist bei vielen Anwendungsgebieten, bei denen keine großen Kräfte auftreten, z.B. bei der Führung eines Laserkopfes zum Schneiden von Material, leicht zu beherrschen und reduziert den Aufwand und Platzbedarf nochmals.

Eine weitere Ausgestaltung der Erfindung besteht darin, nach der Festlegung der drei in einem Tripelpunkt zusammenlaufenden Stäbe die anderen drei notwendigen Stäbe gemäß den speziellen Systemanforderungen anzuordnen und auszuwählen. Besonders günstig ist es hier, ein weiteres Zeigerpaar bzw. Krafteck (zwei Stäbe, die in einem Punkt angreifen) und einen Einzelstab vorzusehen. Damit reduziert sich der für die Steuerung der Bewegung notwendige mathematische Aufwand nochmals dramatisch und in mechanischer Hinsicht erlaubt eine solche Anordnung den Einsatz von Gleichlaufelementen, Führungen etc..

In der folgenden Beschreibung und den Ansprüchen wird zur besseren Lesbarkeit immer von einem "Tripelpunkt" gesprochen, es sei denn, es wird speziell die nahe des Punktes angreifenden Variante, der sogenannte "Pseudo-Tripelpunkt" erläutert oder wenn die Unterschiede zwischen Tripelpunkt und Pseudo-Tripelpunkt eine erwähnenswerte Rolle spielen.

In einer Anzahl von Fällen können einzelne oder mehrere Stäbe und/oder Aktuatoren durch Zugmittel wie Seile, Ketten, Bänder, etc. ersetzt werden, dies ändert nichts an der Erfindung an sich. Es spielt auch in zahlreichen Anwendungsfällen keine Rolle, ob einzelne oder mehrere Aktuatoren als längenveränderliche Stäbe oder als Stäbe konstanter Länge, aber mit Fußpunktverschiebung (seltener Kopfpunktverschiebung, wegen des steigenden mathematischen Aufwandes) verwendet werden. Der Fachmann auf dem Gebiet der Parallelkinematik kann in Kenntnis der Erfindung die entsprechende Auswahl leicht vornehmen, in der Beschreibung und den Ansprüchen wird daher nicht näher darauf eingegangen.

Die Erfindung wird im folgenden anhand der Zeichnung näher erläutert. Dabei zeigt bzw. zeigen:
die Fig. 1-7 eine Kinematik mit Knickarm in einem ersten Betriebsmodus,
die Fig. 8-11 die vorstehende Kinematik in einem zweiten Betriebsmodus,
die Fig. 12-22 eine erste Weiterbildung der Kinematik mit Knickarm,
die Fig. 23-26 eine zweite Weiterbildung der Kinematik mit Knickarm,
die Fig. 27-29 eine dritte Weiterbildung der Kinematik mit Knickarm,
die Fig. 30-37 eine erste Variante einer zweistufigen Kinematik mit Knickarm und
die Fig. 38-48 eine zweite Variante einer zweistufigen Kinematik mit Knickarm,

Die Erfindung wird im folgenden anhand einiger Anwendungsbeispiele betreffend verschiedene Formen von sogenannten Knickarmen, wie Sie bei Robotern in der industriellen Fertigung verwendet werden, geoffenbart. Derartige Konstruktionen werden, unter anderer Bezeichnung, auch im Kranbau, bei Hebezeugen, sogenannten Manipulatoren, etc., verwendet. Derartige Gebilde bestehen aus einer Basis, einem daran befestigten Oberarm, einem daran vorgesehenen Gelenk, oft Ellenbogen genannt, und einem Unterarm mit Werkzeugträger, Greifer, etc.. Es ist nun die Grundidee der Erfindung, zumindest eine, bevorzugt beide der Untereinheiten Basis-Arm-Ellenbogen bzw. Ellenbogen-Unterarm-Werkzeugträger durch zumindest eine erfindungsgemäße Parallelkinematik zu ersetzen.

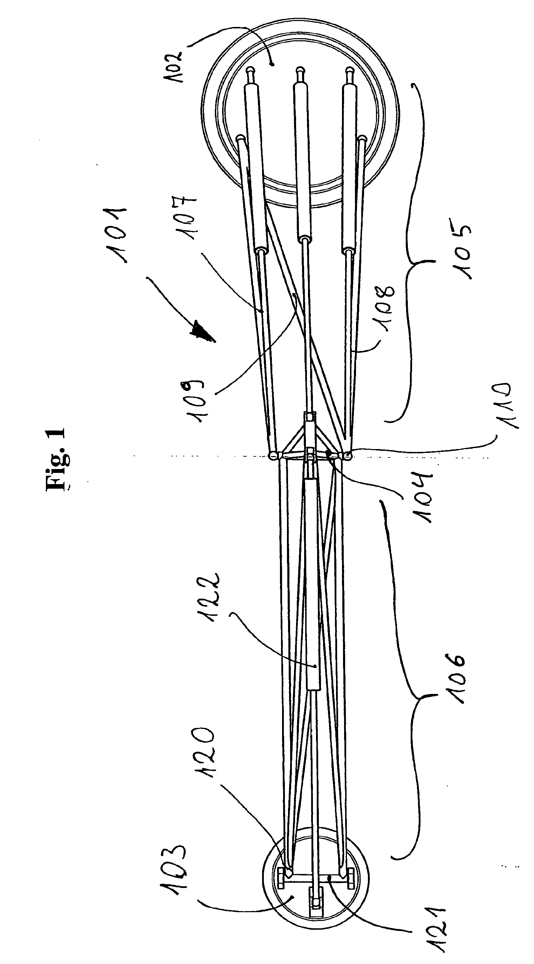

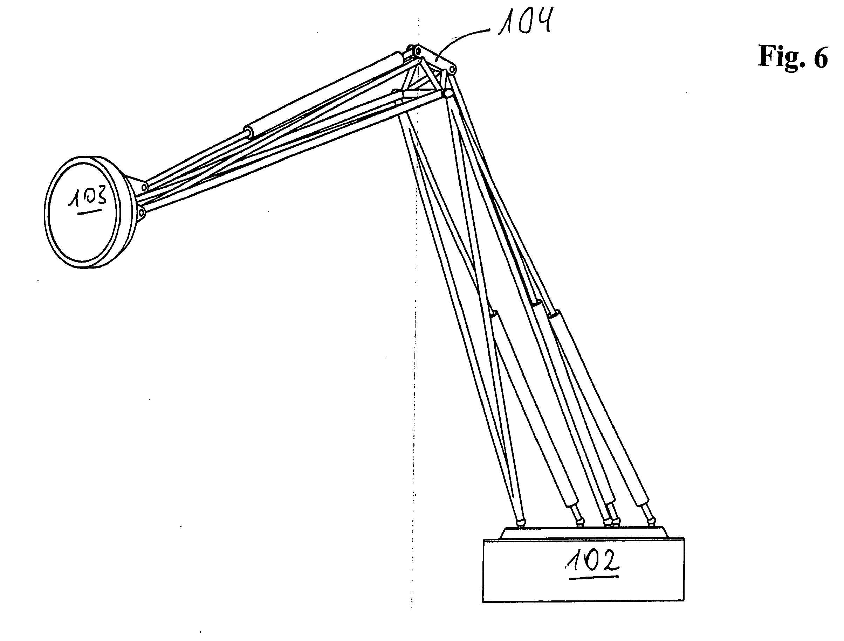

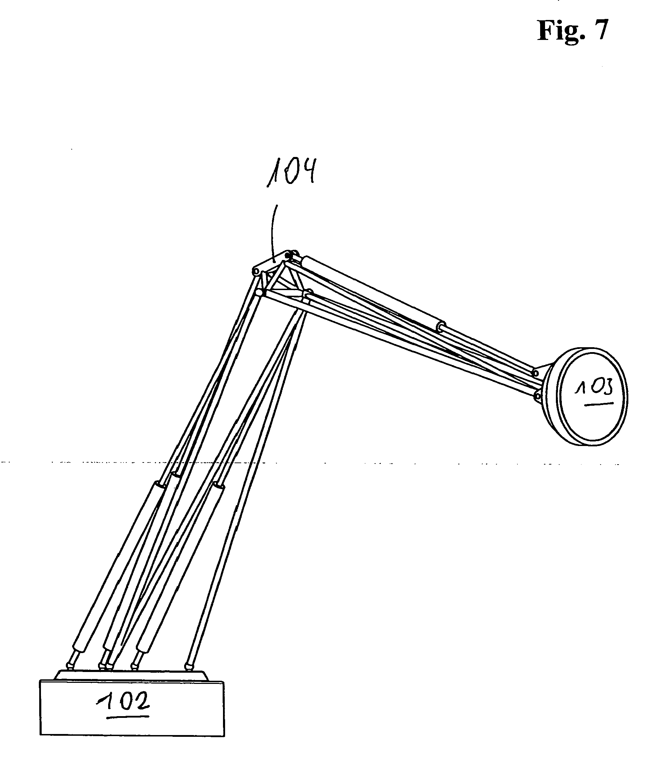

Die Fig. 1 bis 7 zeigen eine erste Variante eines Knickarmes, wie er beispielsweise für einen Roboter oder eine spezielle Hubanordnung, beispielsweise einen Kran, etc. verwendet werden kann. Die Grundidee bei der Verwirklichung des Knickarmes liegt neben der Verwendung von Tripelpunkten oder Pseudo-Tripelpunkten vor allem darin, durch eine serielle Kombination zweier parallelkinematischer Vorrichtungen die bisherigen Nachteile von mechanischen Systemen, die auf Parallelkinematik beruhen, zu vermeiden.

Wie eingangs erläutert, weisen bekannte Parallelkinematiken den großen Nachteil auf, einen großen Raumbedarf zu besitzen und dabei nur einen sehr geringen Arbeitsbereich zu erfassen. Durch die Erfindung, die vorschlägt, zwei parallelkinematische Systeme in Serie zu schalten, wobei die bewegliche Plattform des ersten Systems als feste Plattform des zweiten Systems dient und somit zu einer Mittelplattform wird, gelingt es, äußert bewegliche und mit einem großen Aktionsradius ausgestattete Vorrichtungen zu schaffen. Die durch das serielle Anordnen von Kinematiken üblichen Nachteile treten überraschenderweise praktisch nicht auf, da einerseits nur eine zweistufige Serie geschaffen wird, insbesondere aber auch, weil durch die parallelkinematische Ausbildung der beiden Stufen der seriellen Kinematik die toten Massen außerordentlich klein sind und da durch die üblicherweise verwendeten Lager, wie oben ausgeführt, meist vorgespannte und damit hochgenaue Lager, eine der wesentlichen Problematiken der seriellen Kinematik, nämlich die Addition der Fehler der Positionierung, keine praktische Rolle spielt.

In den Fig. 1 bis 7 ist nun eine erste Variante eines solchen Knickarmes dargestellt, der an seiner beweglichen Plattform ein Werkzeug, eine Hubvorrichtung, eine Greifvorrichtung, ein Werkstück etc. ergreifen, halten, bearbeiten, führen, heben etc. kann.

Es zeigt dabei die Fig. 1 eine Draufsicht auf einen erfindungsgemäßen Knickarm 101, bestehend im wesentlichen aus einer festen Plattform 102, einer ersten Parallelkinematik 105, einer Zwischenplattform 104, einer zweiten Parallelkinematik 106 und einer beweglichen Plattform 103. Die feste Plattform 102 kann tatsächlich fest verankert sein, beispielsweise im Fundament einer Werkhalle oder an einer Bearbeitungsmaschine, es kann sich, wenn der Knickarm als Kran verwendet wird, die feste Plattform 102 entlang von Schienen bewegen oder zumindest um ihre vertikale Mittelachse drehbar gelagert sein, es kann, wenn der Knickarm 101 als Führung für eine Baggerschaufel dient, die feste Plattform 102 mit einer Tragvorrichtung eines Fahrzeuges verbunden sein u.dgl. mehr.

Die erste Parallelkinematik 105 besteht im dargestellten Ausführungsbeispiel aus zwei Zeigerpaaren bzw. Kraftecken 107, 108, die jeweils aus einem Aktuator und einem passiven Stab bestehen und an der Zwischenplattform 104 Doppelpunkte ausbilden. An einem dieser Doppelpunkte ist durch einen Querstab 109 ein Tripelpunkt 110 ausgebildet, womit all die Vorteile, die in der Einleitung der Beschreibung ausführlich erläutert wurden, erreicht werden.

Es soll, nicht nur zur Fig. 1, sondern zu allen anderen Figuren auch, nochmals darauf hingewiesen werden, dass aus Gründen der einfacheren Darstellung die an Doppelpunkten, Tripelpunkten oder Pseudo-Tripelpunkten beteiligten Stäbe bzw. Verbindungselemente als einfach in diese Punkte einmündend und damit auch als untereinander einmündend dargestellt werden, ohne dass die tatsächliche mechanische Ausbildung der Kinematik in diesem Bereich gezeigt wird.

Die vorstehend erläuterte erste Parallelkinematik 105 bewegt die Zwischenplattform 104. Nunmehr wird diese Zwischenplattform 104 als feste Plattform für eine zweite Parallelkinematik 106 verwendet bzw. angesehen, die ähnlich aufgebaut ist wie die erste Parallelkinematik 105, aber einfacher, nämlich mit nur einem Aktuator 122, ausgebildet ist. Es ist auch hier ein Tripelpunkt bzw. Pseudo-Tripelpunkt 120 an der beweglichen Plattform 103 vorgesehen, sodass auch diese Parallelkinematik erfindungsgemäß ausgebildet ist und alle damit erreichbaren Vorteile erhalten werden. Es ist besonders darauf hinzuweisen, dass bei den Parallelkinematiken gemäß dem Stand der Technik der Rechenaufwand derart kaskadierter Systeme, von denen schon jedes für sich nur iterativ zu lösen ist, absolut unbeherrschbar wäre.

Wie aus den Fig. 1 bis 7 ebenfalls leicht zu erkennen ist, besteht die zweite Parallelkinematik 106 dem Grunde nach aus einer Art Fortsatz der Zwischenplattform 104 und bildet, solange der Aktuator 122 nicht betätigt wird, einfach einen Teil dieser Zwischenplattform 104, die sodann gemeinsam mit der beweglichen Plattform 103 eine "exotische bewegliche Plattform" der ersten parallelkinematischen Vorrichtung 105 darstellt.

Durch die Ausbildung eines der Stäbe der zweiten Parallelkinematik 106 als Aktuator 122 und die passende Anordnung der Anlenkpunkte (Kopfpunkte) der anderen Stäbe an der beweglichen Plattform 103 als Doppelpunkte bzw. als Tripelpunkt wird nun eine Drehmöglichkeit um die durch die Anlenkpunkte an der beweglichen Plattform definierte Achse 121 geschaffen, und so aus der oben erläuterten exotischen beweglichen Plattform der ersten Parallelkinematik 105 eine Zwischenplattform 104 mit anschließender zweiter Parallelkinematik 106.

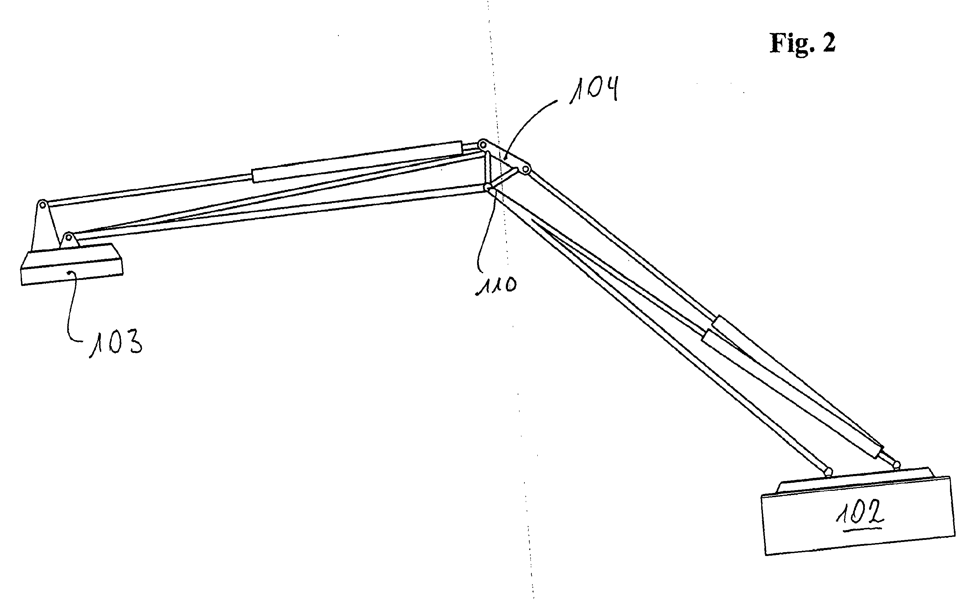

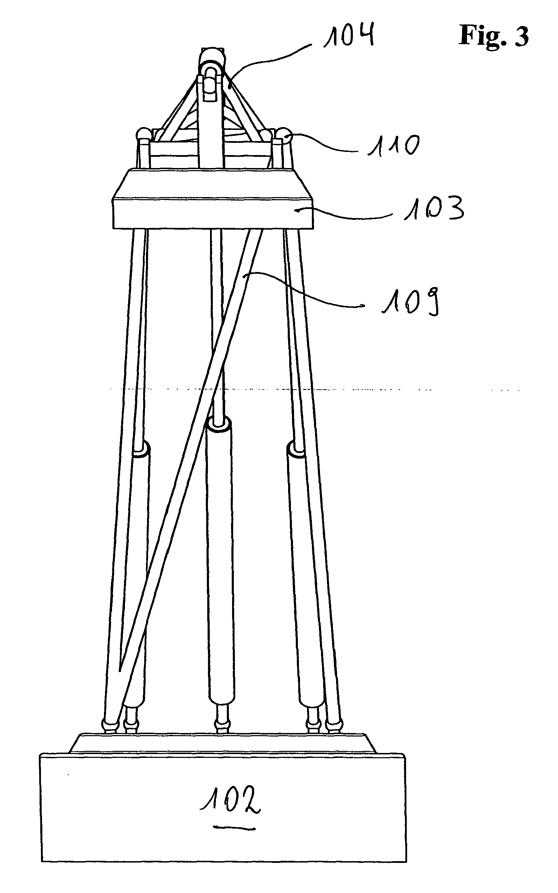

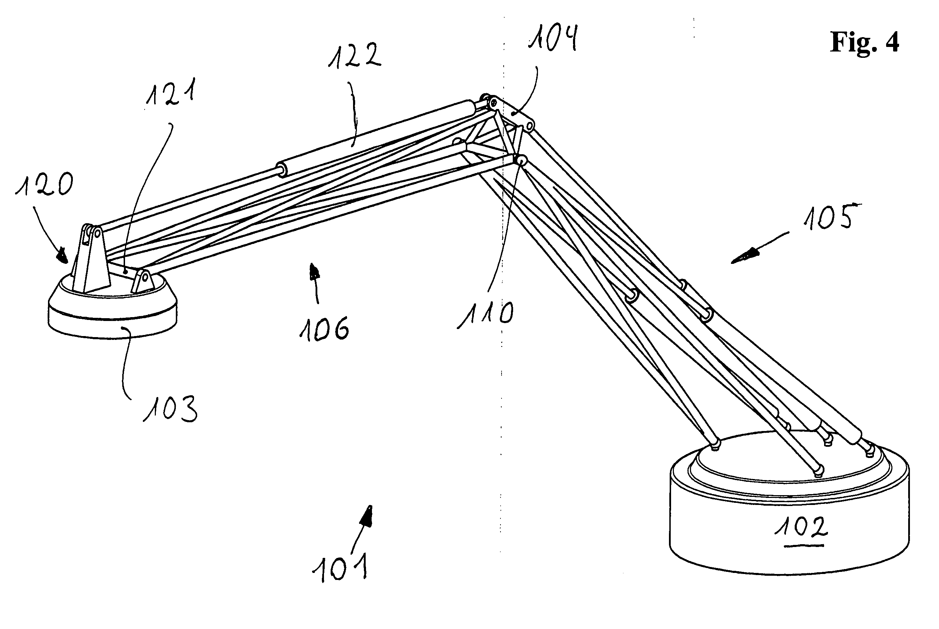

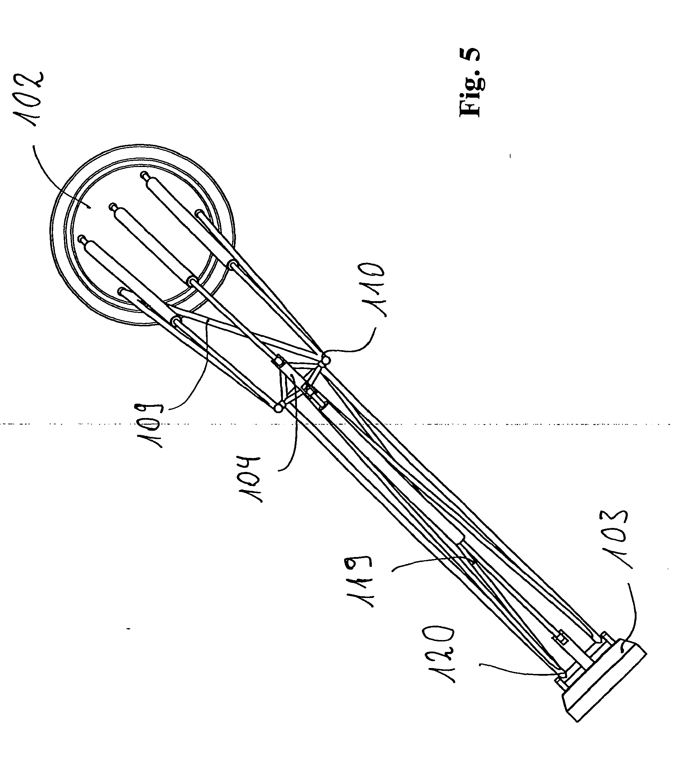

Die vielfältigen Bewegungsmöglichkeiten dieser Kinematik gehen aus den folgenden Figuren hervor, in denen aus Gründen der Übersichtlichkeit nur mehr die jeweils bedeutsamsten Bezugszeichen eingetragen sind. Dabei zeigt die Fig. 2 eine Seitenansicht des Knickarmes in der Stellung der Fig. 1 und die Fig. 3 eine Frontalansicht in dieser Stellung. Die Fig. 4 zeigt eine perspektivische Ansicht, die Fig. 5, 6 und 7 zeigen Ansichten in anderen Stellungen, wobei verschiedentlich (Fig. 5) auch der Querstab 119 der zweiten Parallelkinematik 106, der gemeinsam mit einem Zeigerpaar den Tripelpunkt 120 der zweiten Parallelkinematik 106 ausbildet, gut sichtbar ist.

Wenn man diese Beweglichkeit mit der Beweglichkeit üblicher Parallelkinematiken, wie beispielsweise dem Hexapod oder dem Tricept vergleicht, erkennt man die überraschende Vervielfachung der Reichweite und die mannigfaltigen Orientierungsmöglichkeiten der beweglichen Plattform, die nur durch die erfindungsgemäße Ausbildung des Knickarmes möglich ist.

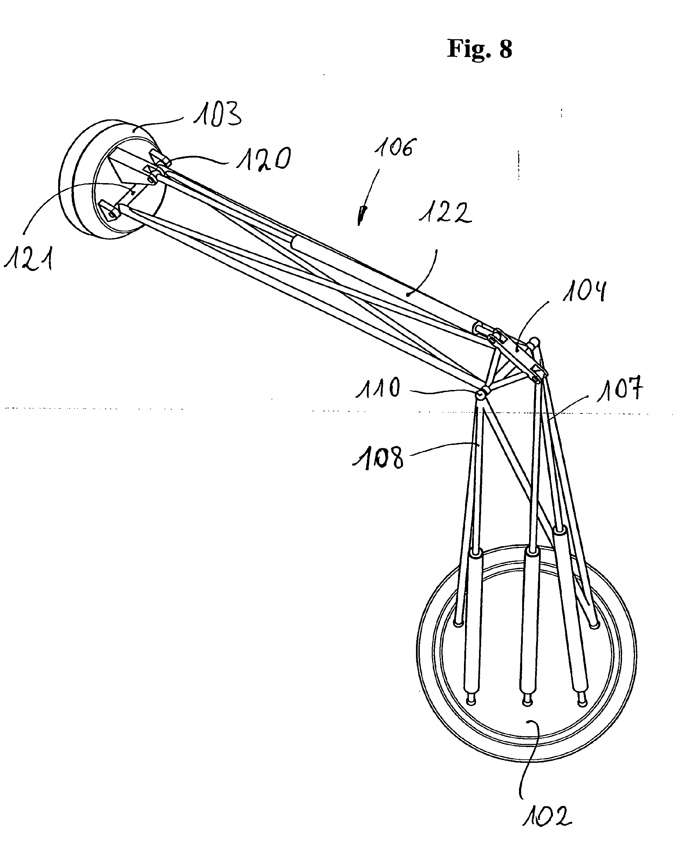

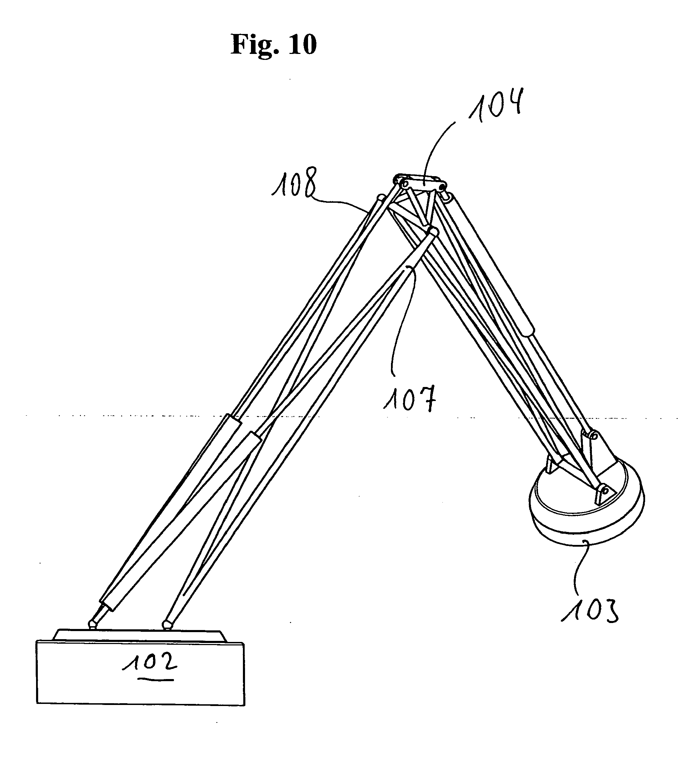

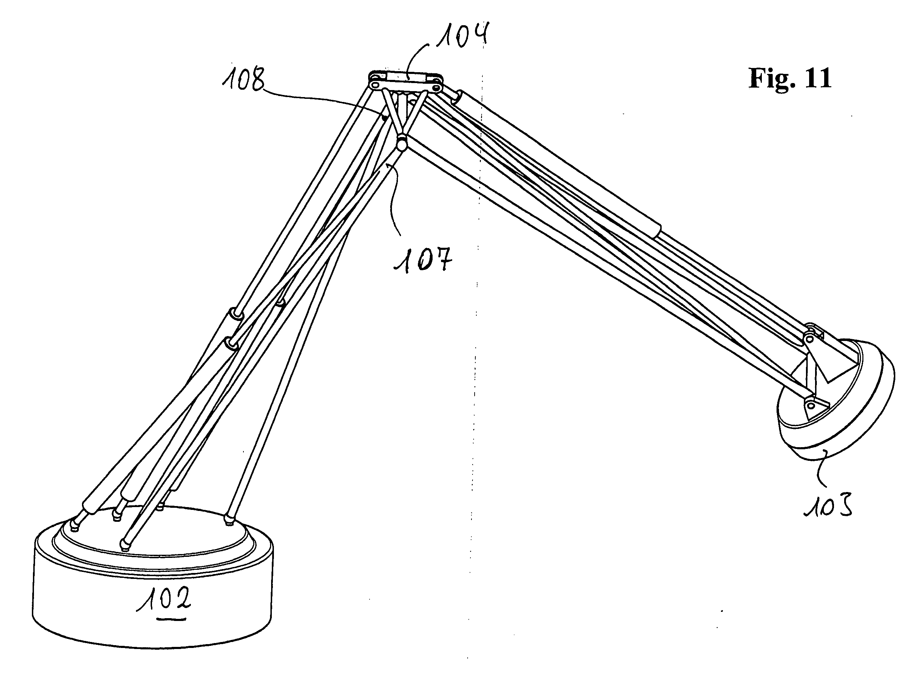

Die Fig. 1 bis 7 zeigen Positionen des Knickarmes, die erreicht werden können, wenn die beiden Zeigerpaare 107, 108 synchronisiert bewegt werden. Bei dieser Art der Bewegung ist es, wie insbesondere aus Fig. 5 hervorgeht, möglich, die bewegliche Plattform 103 normal zum Boden zu orientieren. Die Fig. 8 bis 11 zeigen nun Bewegungen, bei denen die beiden Zeigerpaare 107, 108 nicht synchron, sondern voneinander unabhängig betätigt werden und es ist aus dieser Abfolge von Darstellungen ersichtlich, dass dann zwar eine zusätzliche Beweglichkeit der beweglichen Plattform 103 gewonnen wird, dass aber dafür der Preis zu zahlen ist, dass die bewegliche Plattform 103 nicht mehr normal bzw. parallel zum Boden, darunter wird hier die Ebene verstanden, in der die Fußpunkte der Verbindungsglieder (Stäbe, Aktuatoren) der ersten Parallelkinematik 105 angeordnet sind, verläuft. In der Folge wird dargelegt, wie erfindungsgemäß auch unter solchen Bedingungen eine solche Orientierung möglich wird.

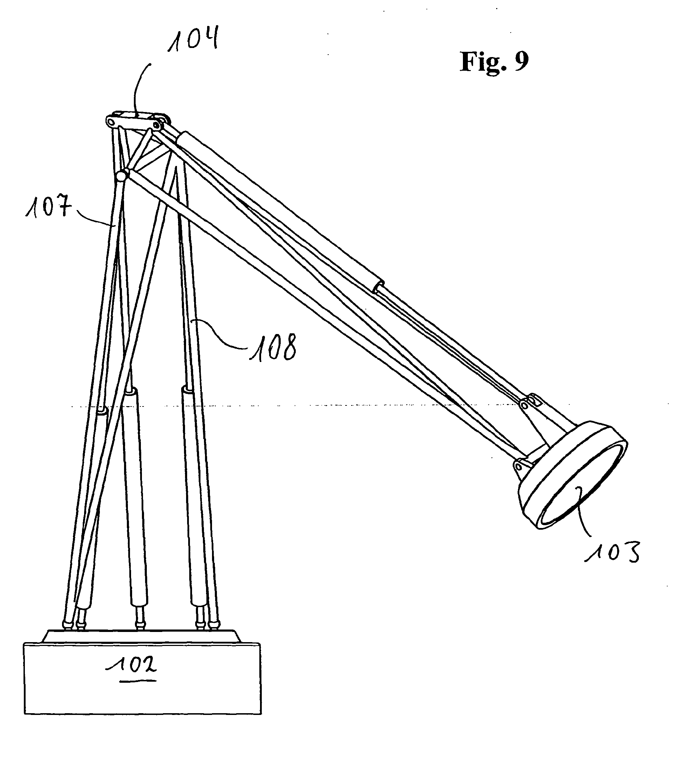

Aus Fig. 8, einer Draufsicht auf einen erfindungsgemäßen Knickarm entsprechend dem der Fig. 1 bis 7 ist ersichtlich, dass das Zeigerpaar 107 und das Zeigerpaar 108 nicht mehr symmetrisch zueinander verlaufen (asynchrone Betätigung der Zeigerpaare), d.h. der Aktuator des Zeigerpaares 107 ist länger als der Aktuator des Zeigerpaares 108, wodurch eine Drehung der Zwischenplattform 104 und damit der gesamten zweiten Kinematik 106 bewirkt wird. Diese in vielen Fällen angestrebte Schräglage und die damit erzielte größere Reichweite bringt es durch Schrägstellung der Zwischenplattform 104 aber mit sich, dass, wie oben kurz angeführt, die bewegliche Plattform 103 nicht mehr in eine Ebene normal bzw. parallel zu der Ebene der festen Plattform 102 gebracht werden kann. Dies ist insbesondere im Zusammenhalt mit den Fig. 9 bis 11 ersichtlich.

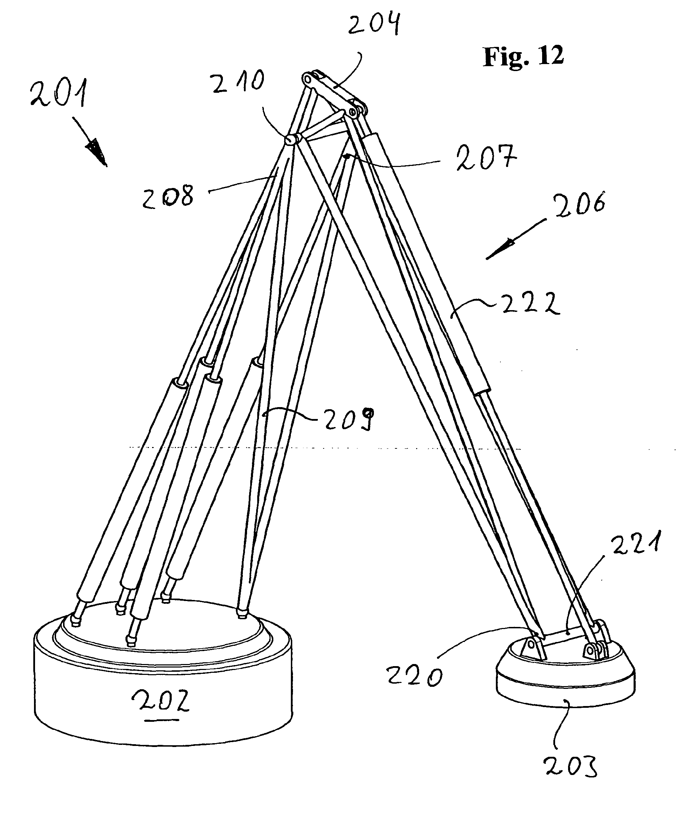

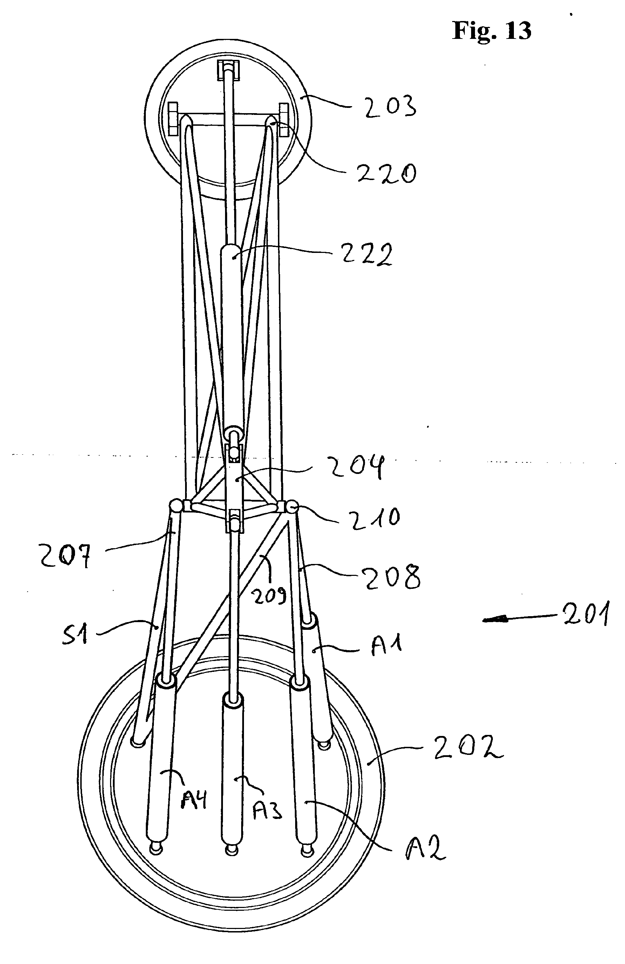

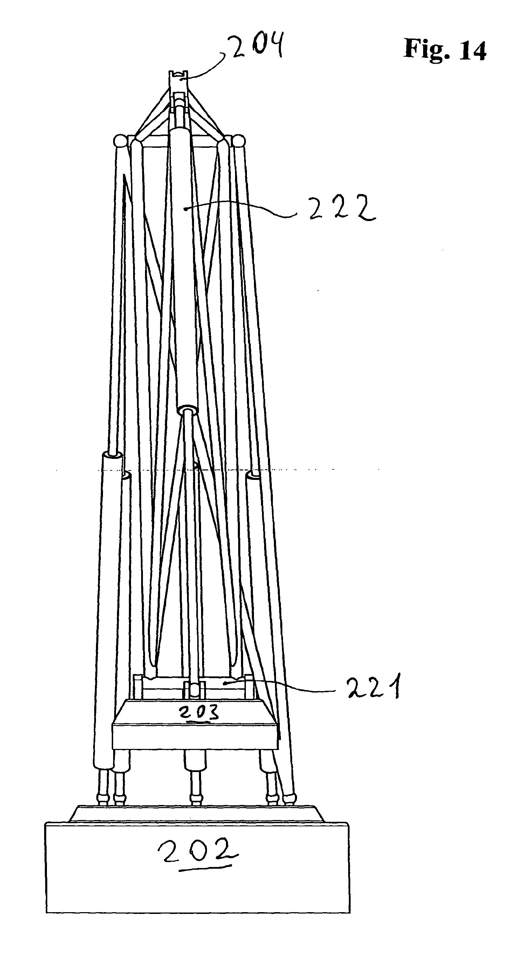

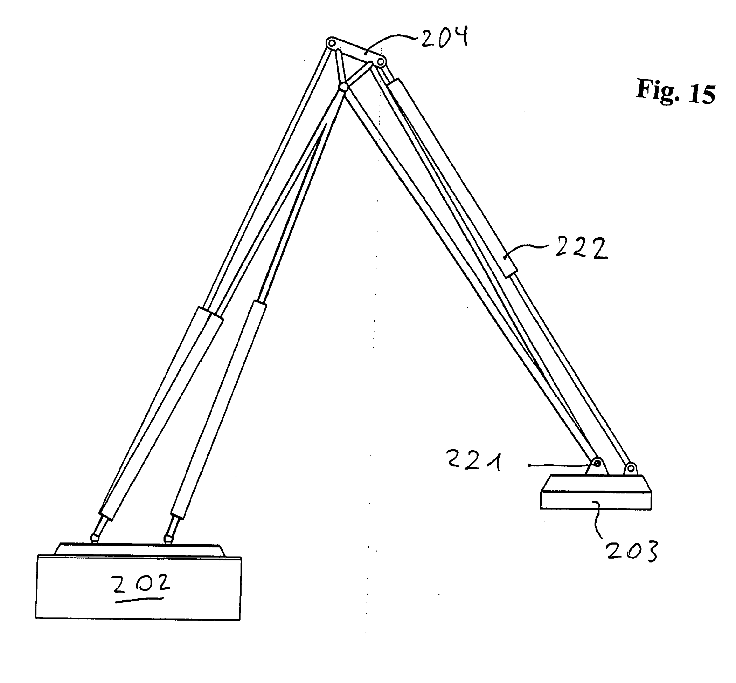

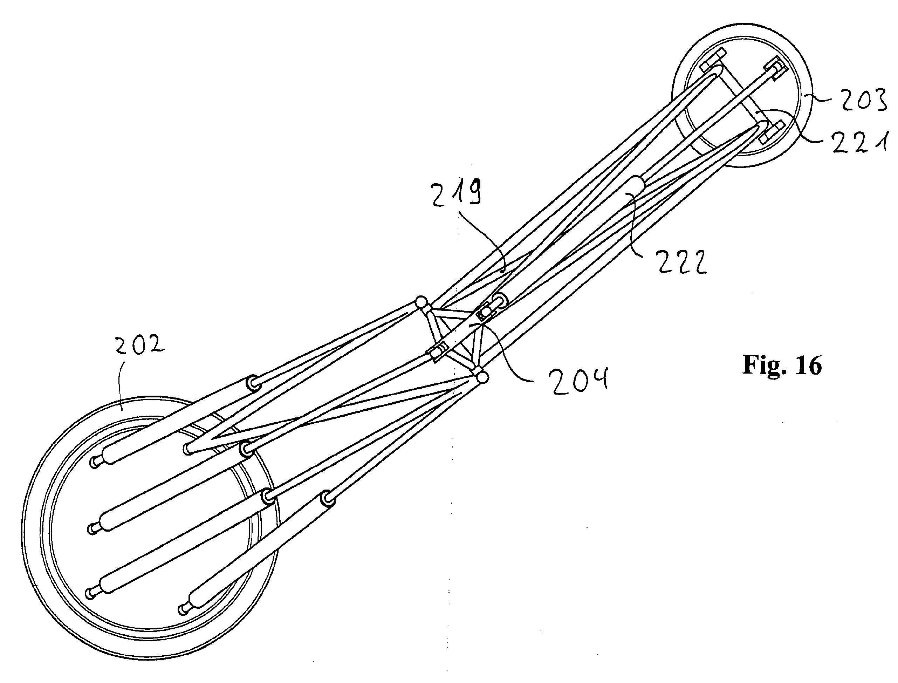

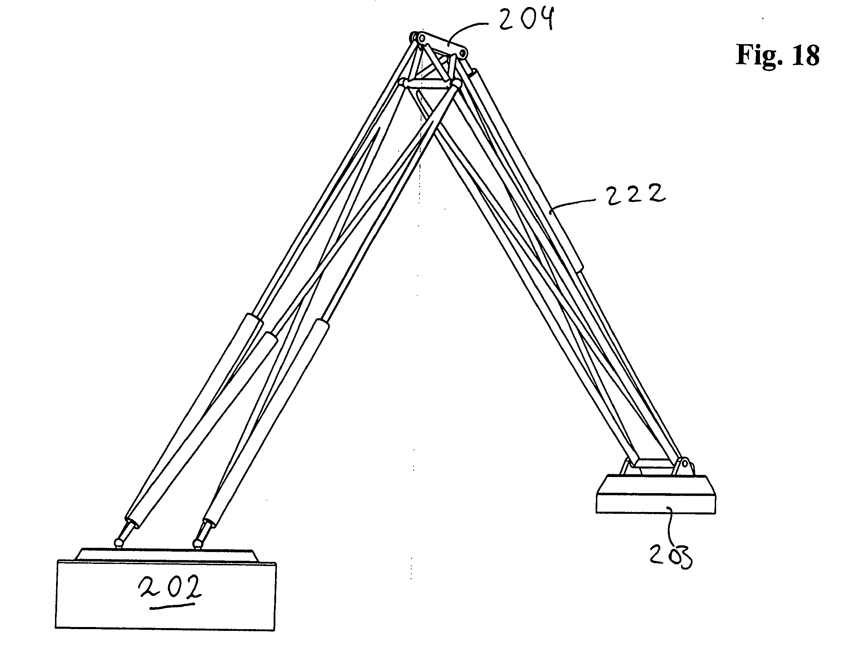

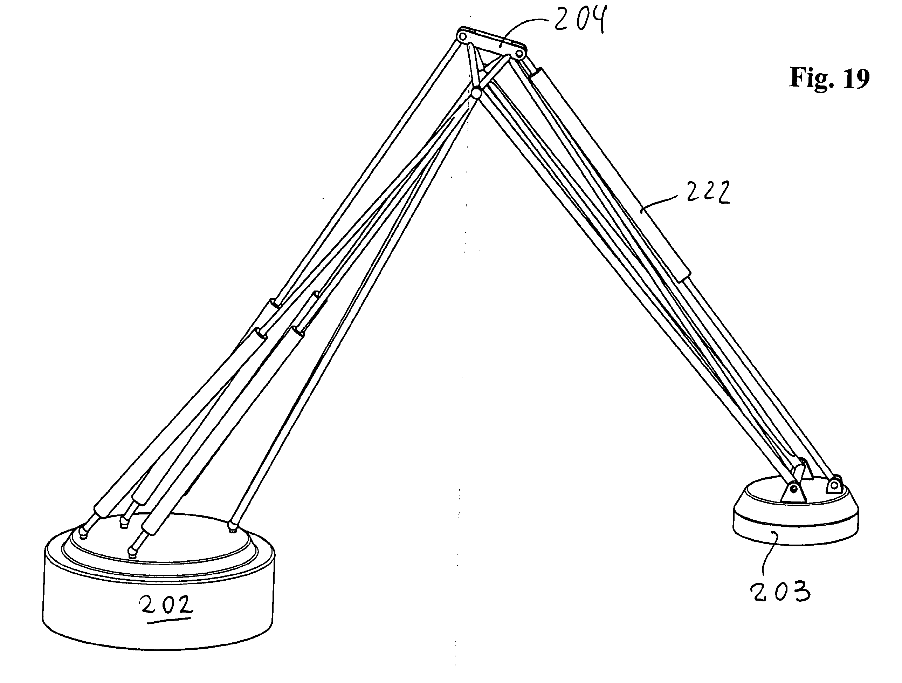

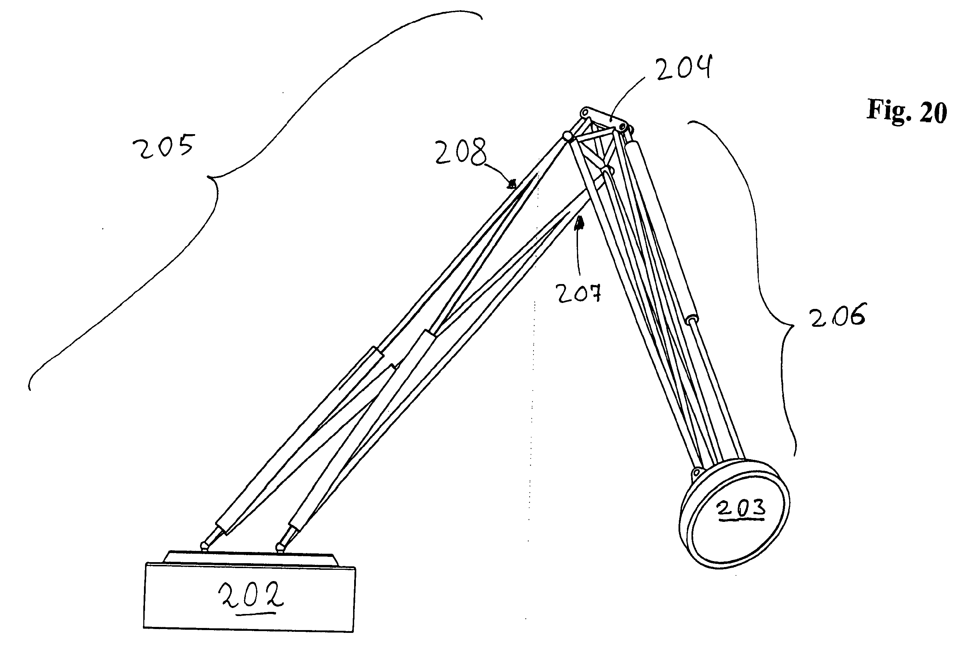

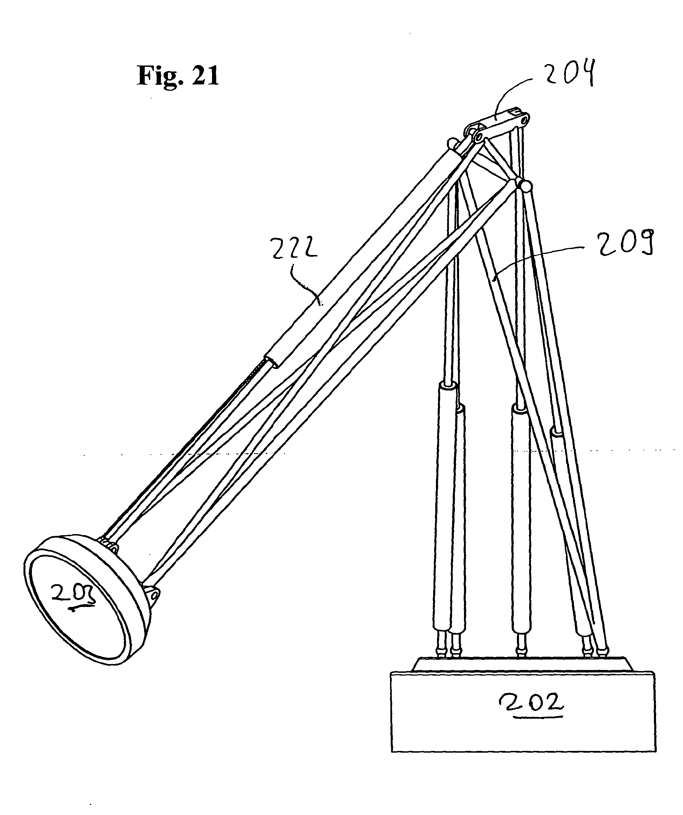

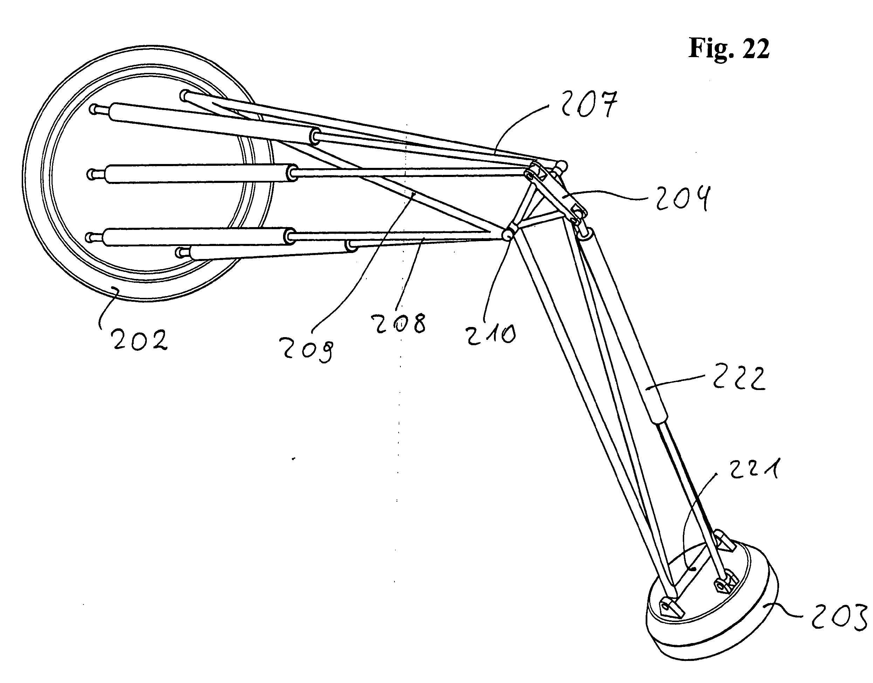

Die Fig. 12 bis 22 zeigen eine zweite Variante 201 eines Knickarmes, die sich von der ersten Variante 101 nur dadurch unterscheidet, dass das Zeigerpaar 208 (von der Anordnung her entsprechend dem Zeigerpaar 108 der ersten Ausführungsform) aus zwei Aktuatoren besteht, während das Zeigerpaar (Krafteck) 108 der ersten Variante 101 aus einem Aktuator und einem passiven Stab bestand. Die Folge dieser einfachen Maßnahme ist nun unmittelbar aus den Figuren zu erkennen, es ist hier auch bei nicht synchronisierter Bewegung der Zeigerpaare (Kraftecke) 207, 208 stets möglich, die bewegliche Plattform 203 normal bzw. parallel zur Ebene zur festen Plattform 202 zu orientieren was aus der in den dargestellten Positionen stets waagrecht verlaufenden Achse 221 erkennbar ist, um die die bewegliche Plattform 203 durch Betätigen des Aktuators 222 verschwenkt wird. Dies ist insbesondere aus der Zusammenschau der Fig. 15 bis 19 gut zu erkennen.

Selbstverständlich sind mit dieser Ausgestaltung des Knickarmes 201 in jeder der gezeigten Positionen auch in weiten Grenzen andere Orientierungen der beweglichen Plattform 203 erreichbar, es sind auch alle Positionen erreichbar, die mit der zuvor erläuterten Variante 101 erreichbar sind, und selbstverständlich auch schräge Positionen der beweglichen Plattform 203, doch soll mit den Darstellungen in der Zeichnung die Möglichkeit des Einnehmens ganz bestimmter Lagen und Positionen dargestellt werden, die ebenfalls erreichbaren windschiefen relativen Positionen der festen Plattform 202 und der beweglichen Plattform 203 bedürfen als Zwischenlagen nach diesseitiger Ansicht keiner näheren Erläuterung.

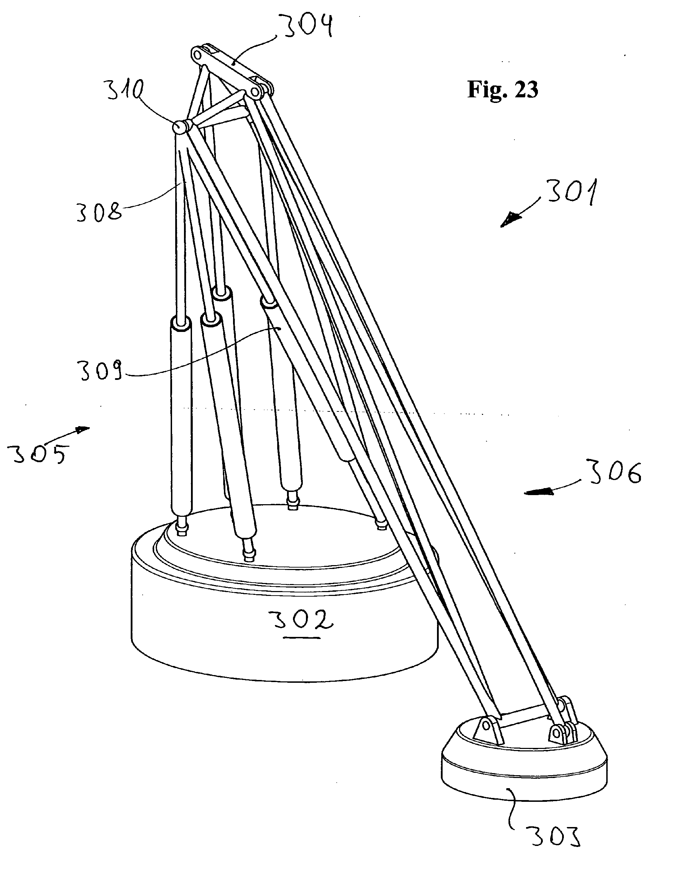

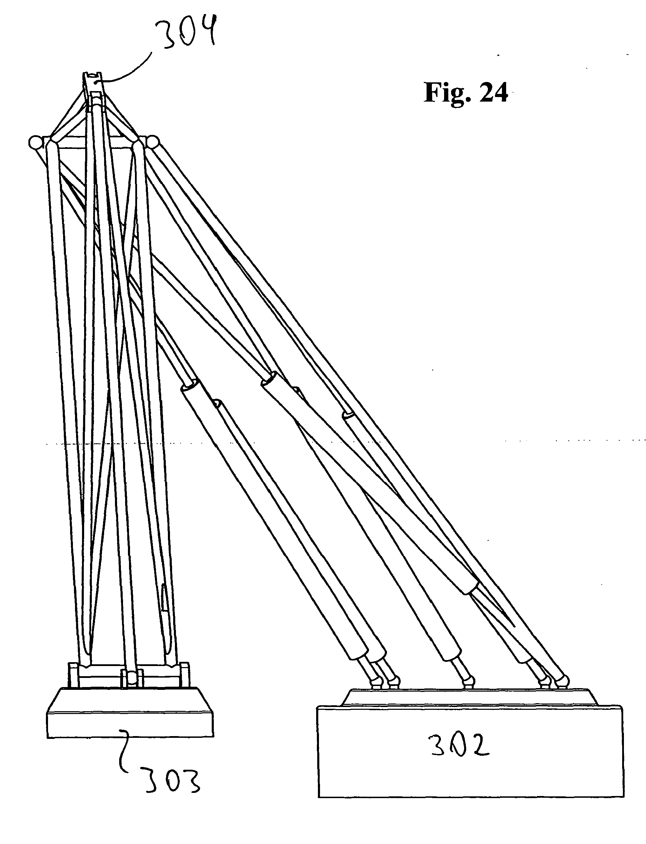

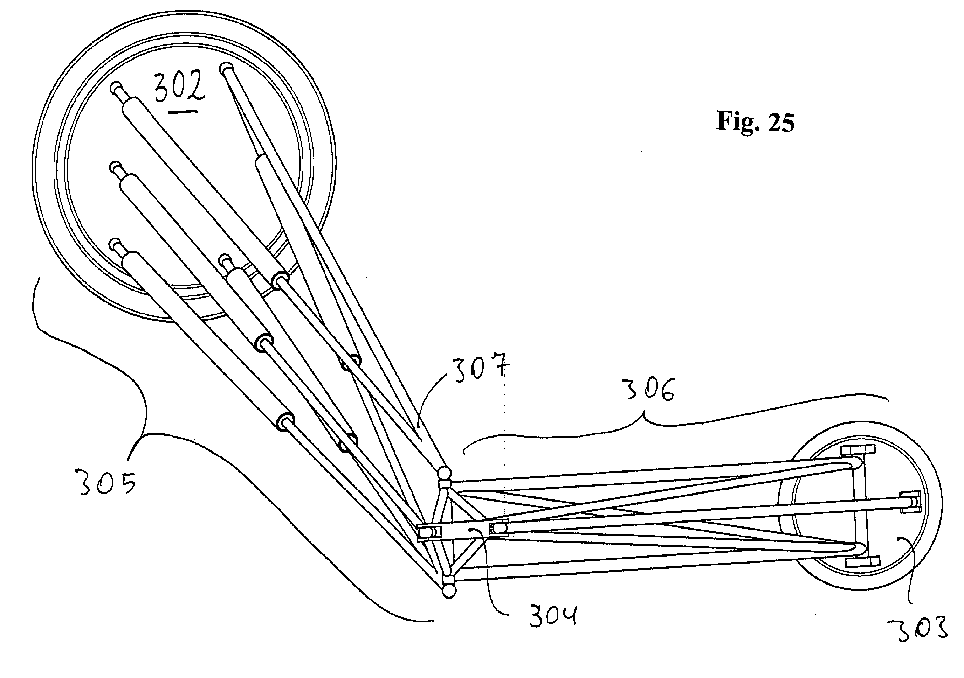

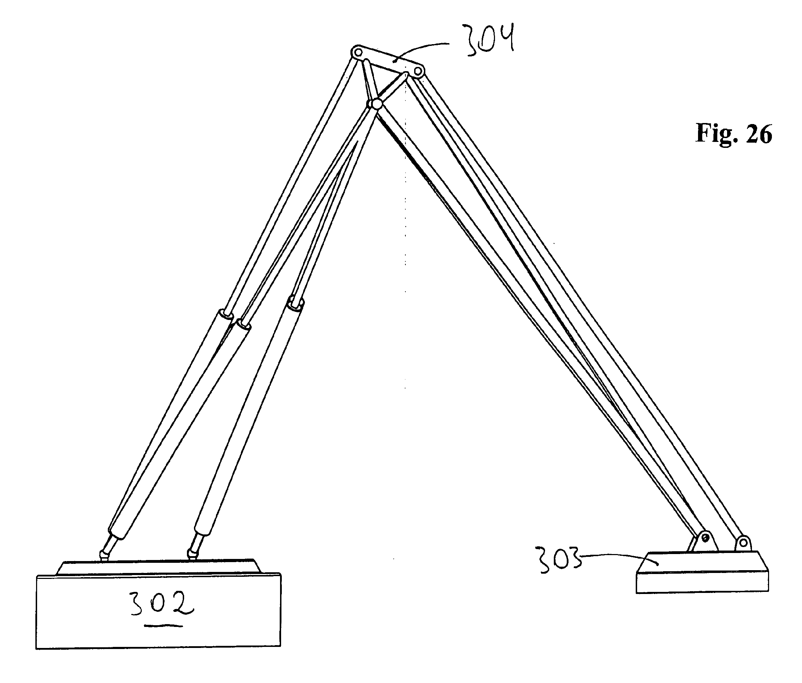

Eine Art Sonderform eines erfindungsgemäßen Knickarmes ist in den Fig. 23 bis 26 dargestellt. Die Fig. 23 zeigt in perspektivischer Ansicht einen Knickarm 301, der im Prinzip ähnlich aufgebaut ist wie die Knickarme 101 und 201. Als Besonderheit sind alle drei Stäbe, die zum Tripelpunkt 310 führen, als Aktuatoren ausgebildet, vom Zeigerpaar 307 (Fig. 25) ist ein Stab ein Aktuator, der andere ein passiver Stab. Wie schon beim Knickarm 201 ist auch der Querstab 309 ein Aktuator und greift am Tripelpunkt 310 an.

Durch diese Ausgestaltung ist es nun ein Leichtes, die zweite Parallelkinematik ausschließlich aus passiven Stäben so aufzubauen, dass durch entsprechende Platzierung der Zwischenplattform 304 die Ebene der beweglichen Plattform 303, definiert durch die daran angreifenden Anlenkpunkte der Stäbe der zweiten Parallelkinematik 306, stets parallel zur Ebene der festen Plattform 302, definiert durch die Angriffspunkte der daran angreifenden Verbindungselemente der ersten Parallelkinematik 305, verläuft. Eine derartige Anordnung ist bei Schneid- oder Heftmaschinen, bei Prüfvorrichtungen für ebene Oberflächen, bei Kränen, Hubmagneten, etc. wegen des geringen toten Gewichtes vorteilhaft und für die vorgesehenen Tätigkeiten völlig ausreichend. Es sei hier noch auf den großen Arbeitsradius dieser Vorrichtung hingewiesen, insbesondere, wenn die feste Plattform 302 um ihre Hochachse drehbar und/oder entlang einer geraden oder kreisförmigen Bahn verfahrbar ausgebildet ist.

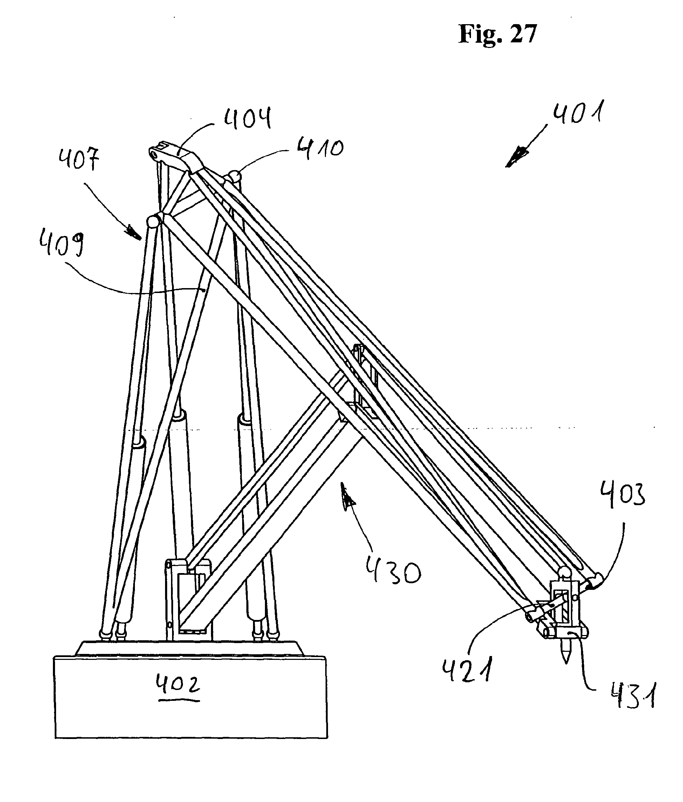

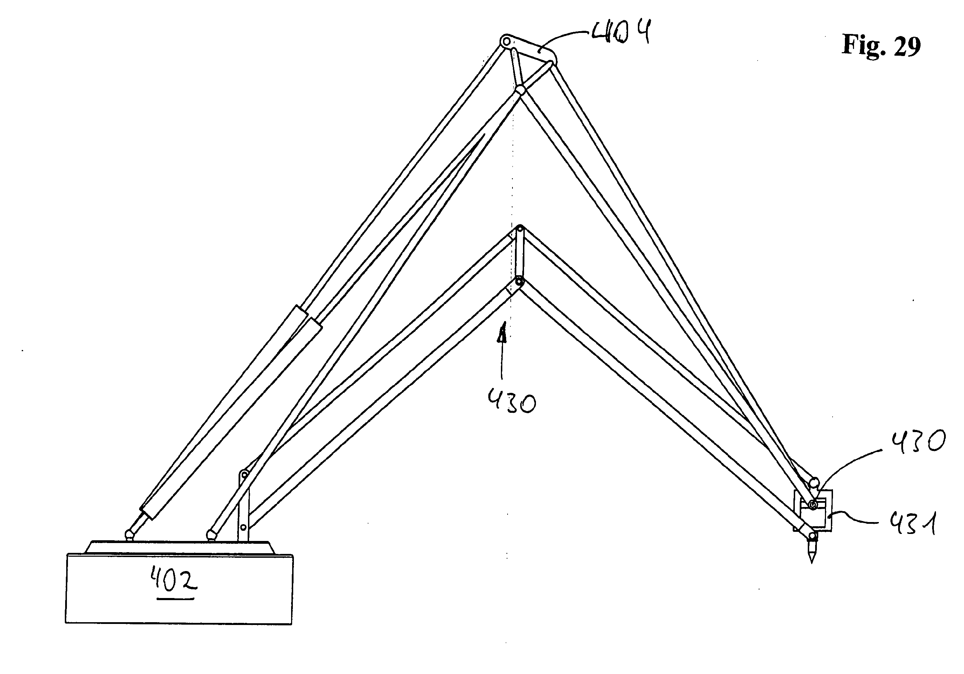

Die Fig. 27 bis 29 zeigen eine besondere Ausgestaltung eines erfindungsgemäßen Knickarmes, die besonders bei Anwendungen vorteilhaft ist, bei denen eine rasche und genaue Positionierung eines Werkzeuges gewünscht ist. Dies kann beispielsweise ein Laserschneidgerät, eine Wasserstrahlschneidgerät, eine Überwachungskamera oder etwas ähnliches sein.

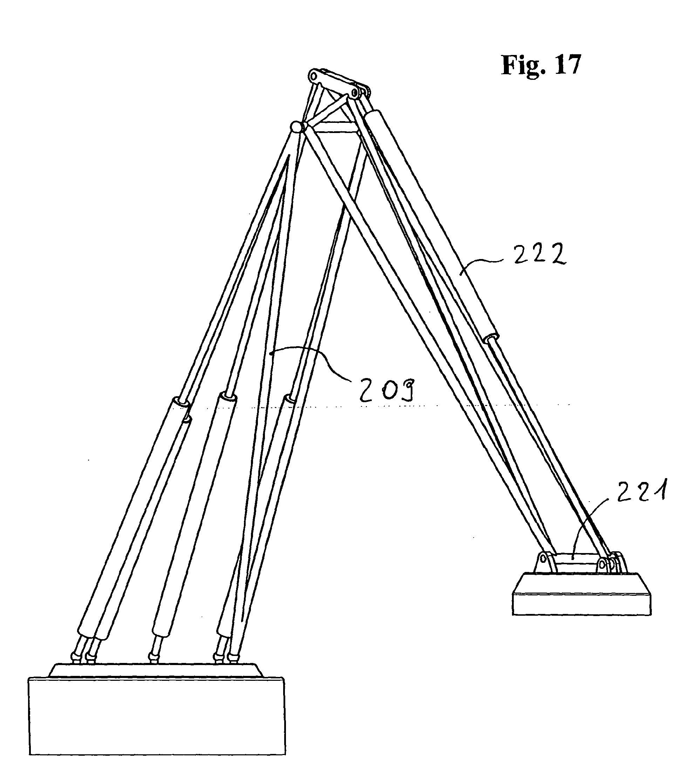

Die Vorrichtung besteht aus einer ersten Kinematik 405, die so aufgebaut ist wie die anhand des ersten Beispiels erläuterte erste Kinematik 105. An der Zwischenplattform 404 ist eine zweite Kinematik befestigt, die ähnlich ausgebildet ist wie die zweiten Kinematiken 206 bzw. 306, nur fehlt der Aktuator 222 bzw. der dessen Stelle einnehmende passive Stab (ohne Bezugszeichen). Die bewegliche Plattform 403 degeneriert damit zu einer Achse oder Welle 421 analog zur Achse 221 (Fig. 17) und auf dieser Achse sitzt, kardanisch gelagert, eine Arbeitsplattform 431. Diese Arbeitsplattform 431 ist im dargestellten Ausführungsbeispiel mit einem symbolischen Werkzeug versehen. An der kardanischen Aufhängung greift eine Parallelogrammführung an, die für die stets vertikale Ausrichtung (bezogen auf die Ebene der festen Plattform 402) des Werkzeuges sorgt.

Die Parallelogrammführung 430 ist an der festen Plattform 402 um eine vertikale Achse drehbar gelagert und besteht aus zwei aneinander gereihten, eine gemeinsame Seite aufweisenden Parallelogrammen, sodass die Halterung an der kardanischen Aufhängung stets parallel zur Aufhängung an der festen Plattform 402 verläuft. Durch die Drehmöglichkeit um die vertikale Achse an der festen Plattform 402 wird die Parallelogrammführung 430 stets den Bewegungen der zur Welle 421 degenerierten beweglichen Plattform 403 nachgeführt.

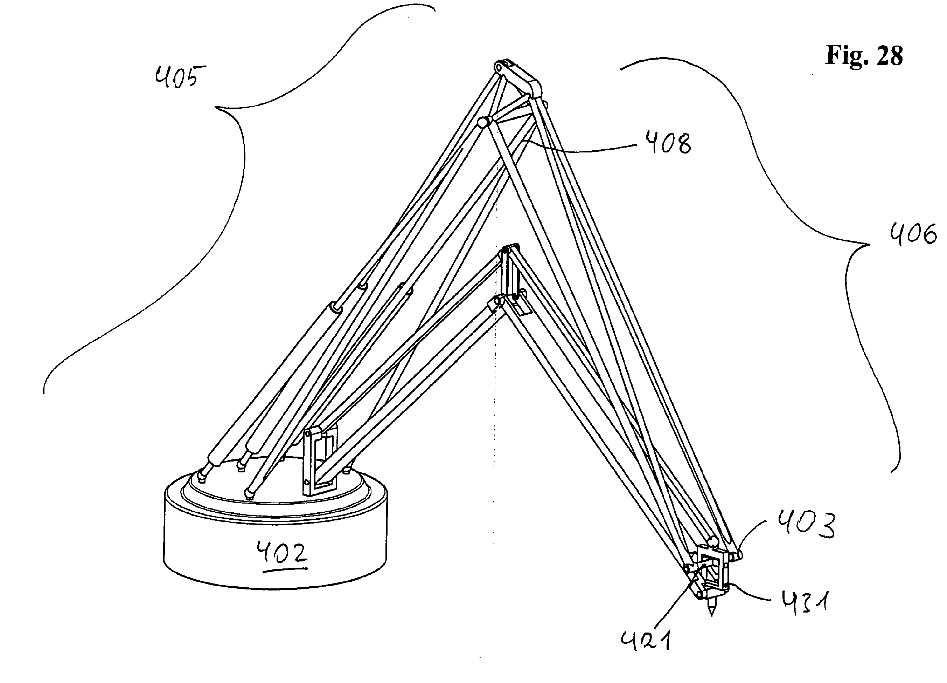

Aus einer Zusammenschau der Fig. 27 und 28 ist gut zu erkennen, wie durch die kardanische Aufhängung auch bei schräg gestellter beweglicher Plattform 403, entsprechend der Welle 421, die Werkzeugplattform 431 vertikal positioniert ist. Es ist noch darauf hinzuweisen, dass bei entsprechender Schrägstellung der beiden Parallelkinematiken 405, 406 die Parallelogrammführung 430 in Draufsicht das durch die beiden Kinematiken aufgespannte Dreieck schließt, sodass sich eine räumlich sehr ungewöhnliche Position ergibt.

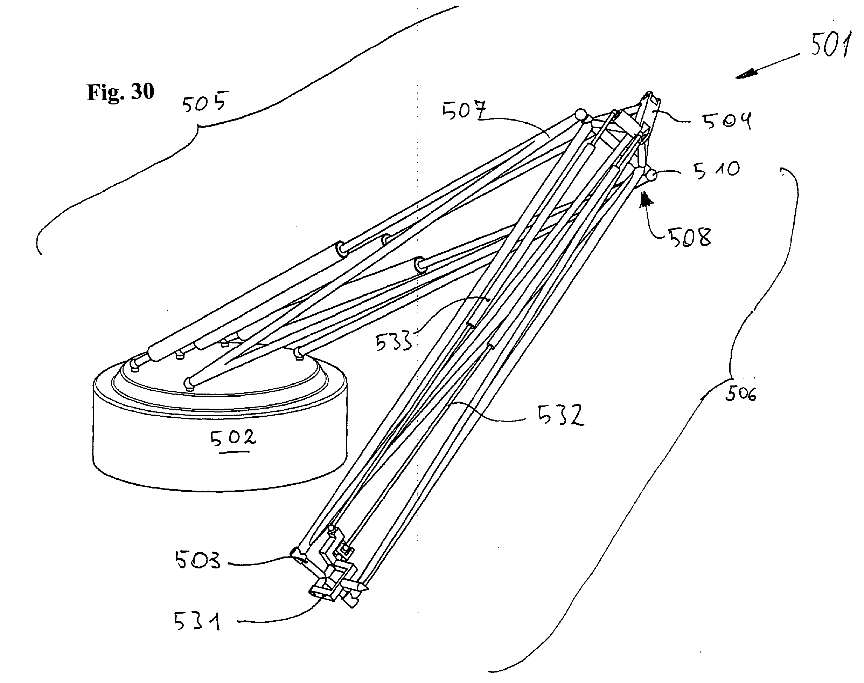

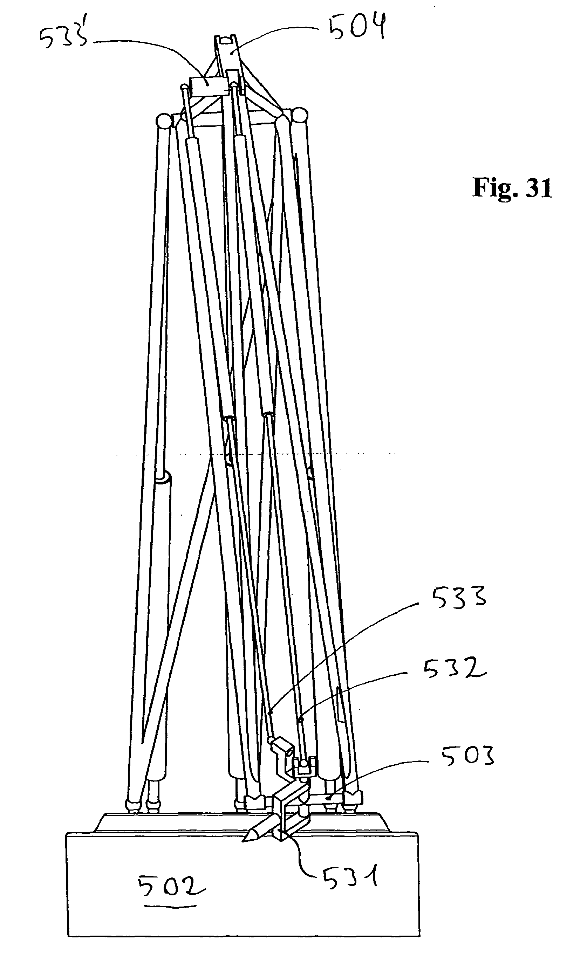

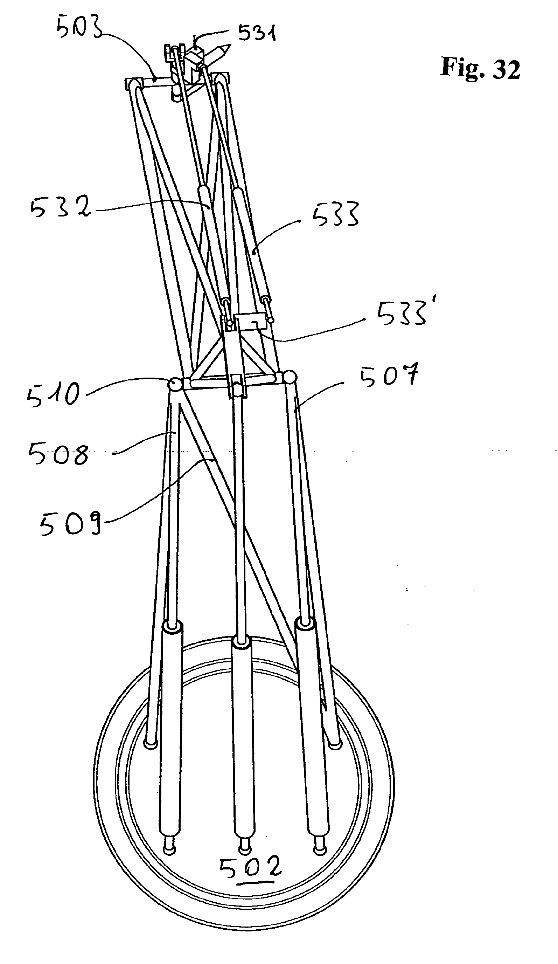

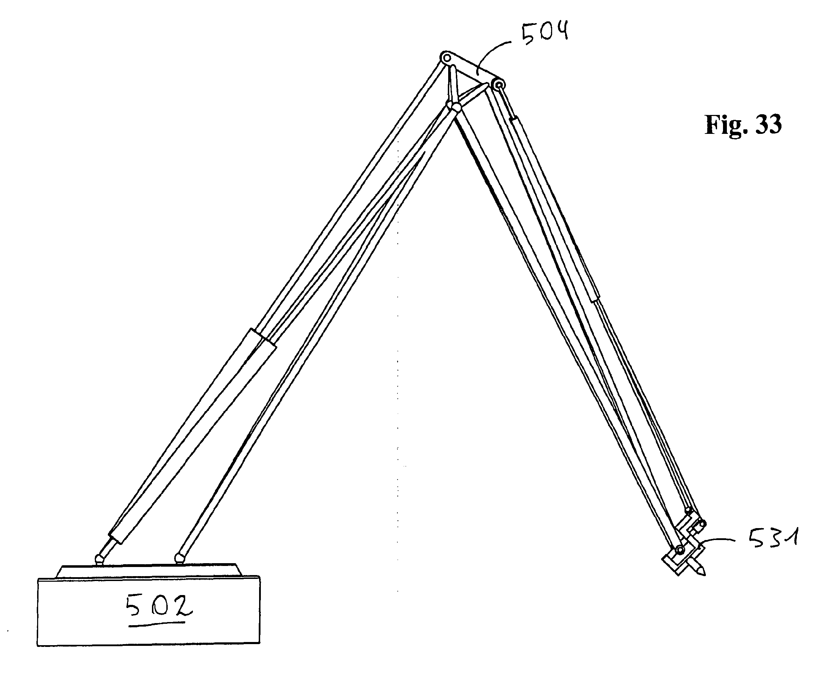

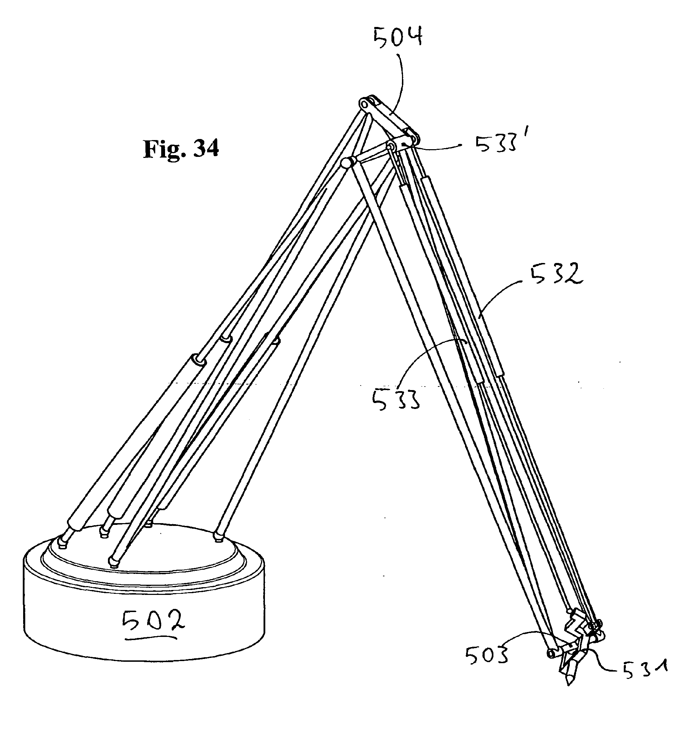

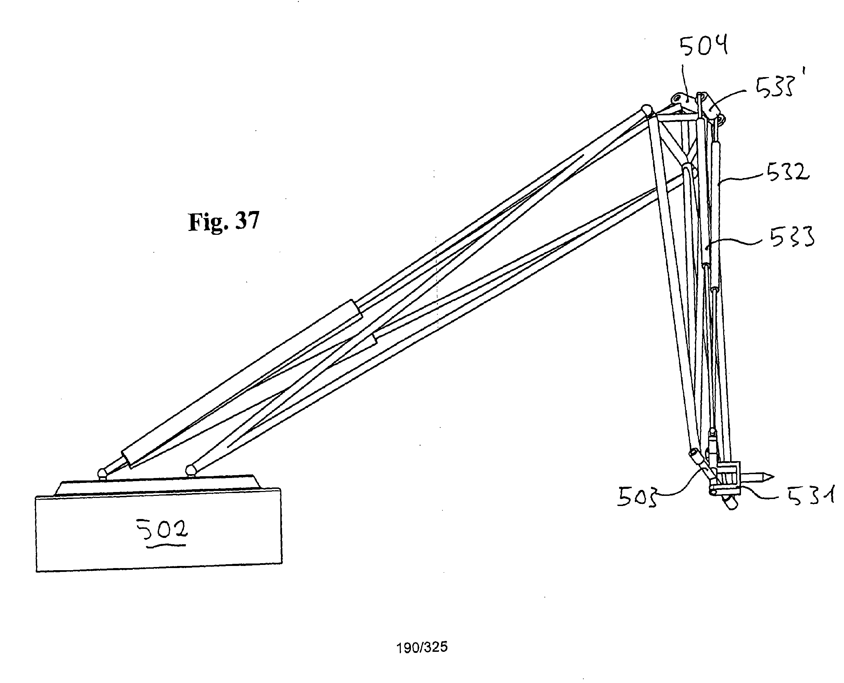

Eine weiter flexible Ausgestaltung der Grundidee der Erfindung ist den Fig. 30 bis 37 zu entnehmen. Dabei ist bei einem Knickarm 501 eine erste Parallelkinematik 505 vorgesehen, die so aufgebaut ist wie die erste Parallelkinematik 105 im ersten Ausführungsbeispiel und daher hier nicht nochmals erklärt wird, die zweite Parallelkinematik 506 ist allerdings komplex aufgebaut und wird im Folgenden näher erläutert.

Die zweite Parallelkinematik 506, die sich von der Zwischenplattform 504 zur beweglichen Plattform 503 erstreckt ist, so wie im zuvor erläuterten Ausführungsbeispiel dahingehend reduziert bzw. denaturiert, dass die bewegliche Plattform 503 zu einer Welle geschrumpft ist, auf der kardanisch gelagert ein Werkzeugträger 531 sitzt. Die Positionierung dieses Werkzeugträgers an der und um die Welle 503 erfolgt mittels zweier Aktuatoren 532 und 533. Beim dargestellten Ausführungsbeispiel greift der Aktuator 532 an der Verlängerung einer der kardanischen Achsen an, der Aktuator 533 an einem aus der kardanischen Aufhängung ragenden Hebel. Dieser Aktuator 533 ist auch an einem fest mit der Zwischenplattform 504 verbundenen Hebel 533' angelenkt.

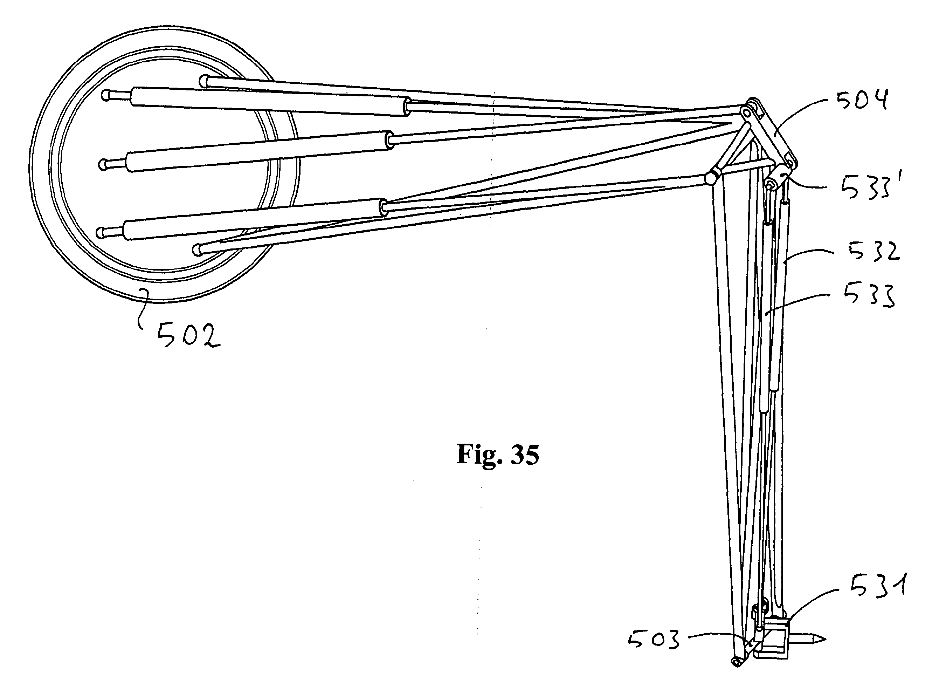

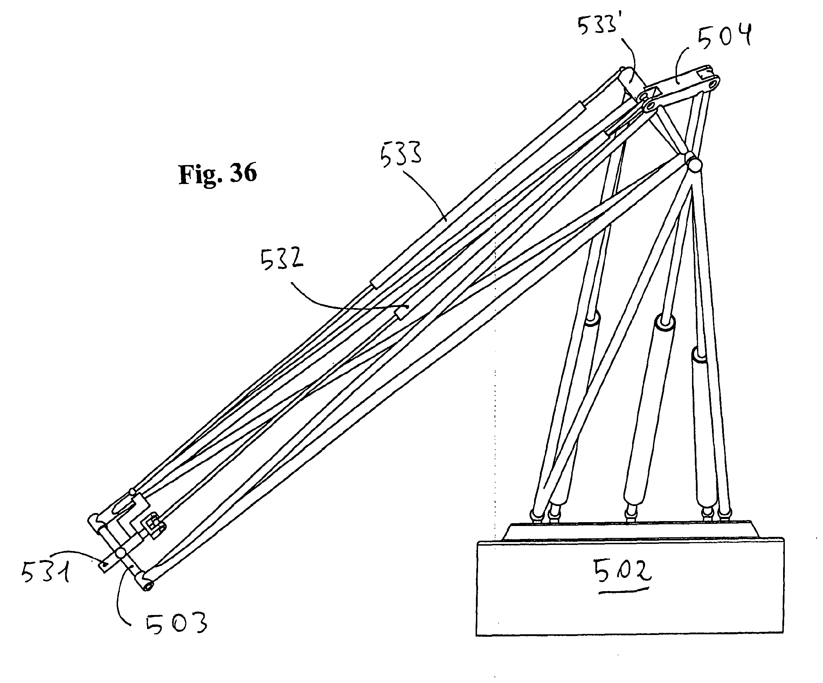

Die überaus große Beweglichkeit und die Reichweite dieser Vorrichtung gehen aus den einzelnen Figuren deutlich hervor, besonders hinzuweisen ist dabei auf Fig. 35, die in Draufsicht zeigt, wie auch bei stark abgesetzter und entfernter Positionierung der beweglichen Plattform 503 die Werkzeugaufhängung 531 so geführt werden kann, dass das Werkzeug praktisch im rechten Winkel von der beweglichen Plattform 503 absteht. Diese hervorragende Flexibilität ist auch aus Fig. 36 ersichtlich, die eine Seitenansicht zeigt.

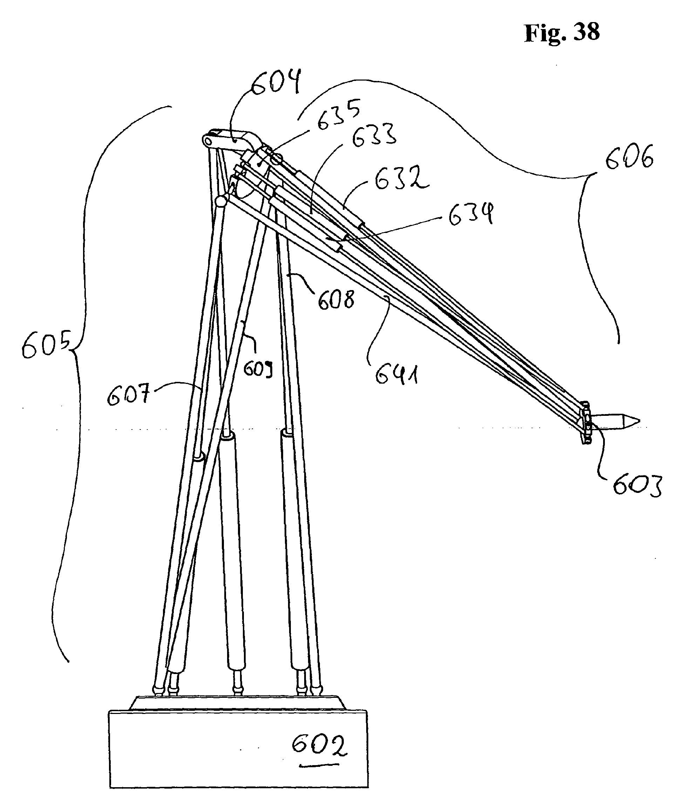

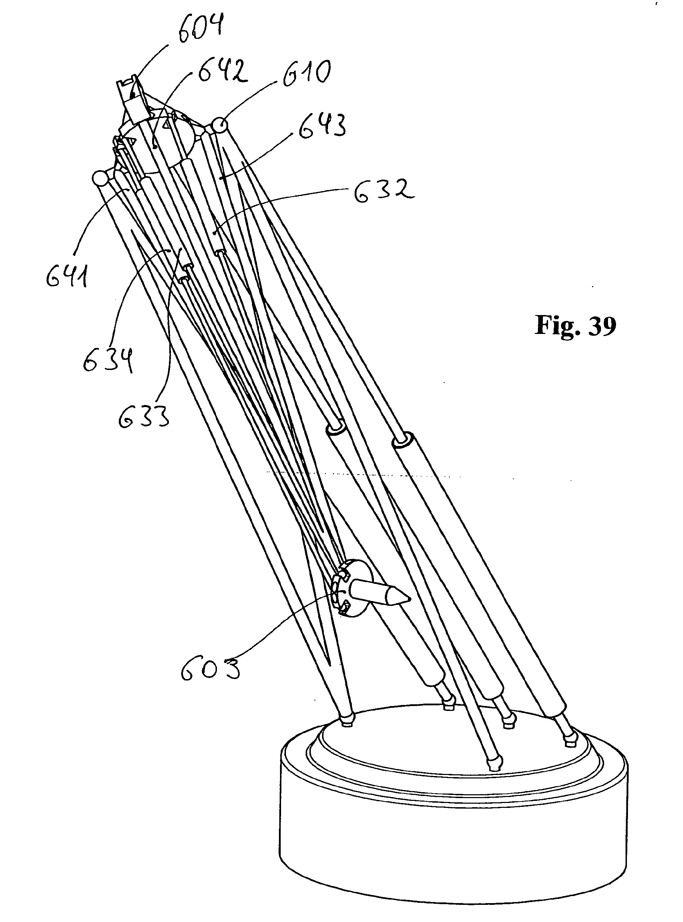

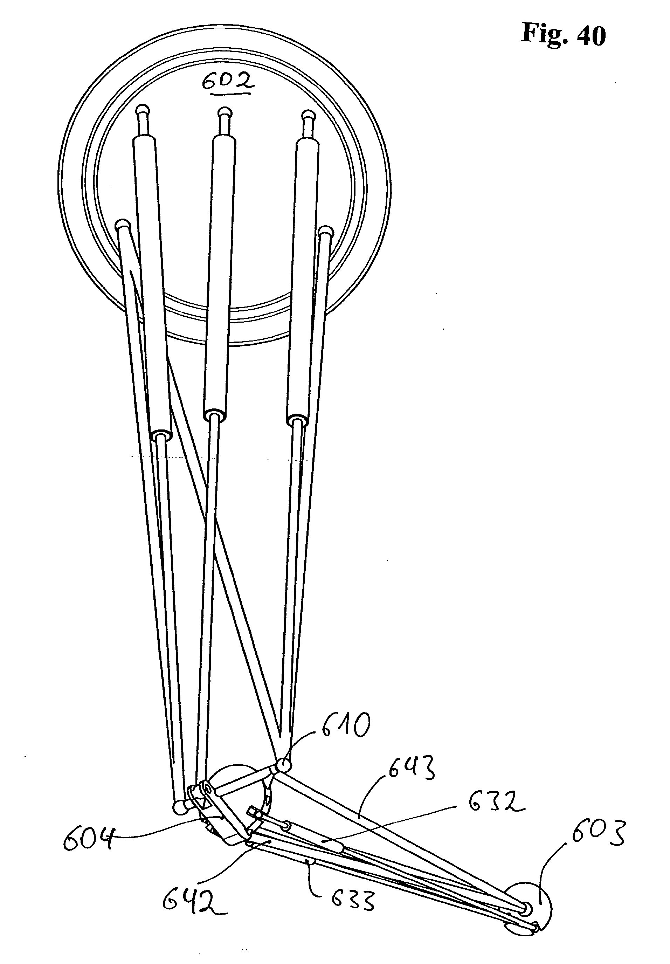

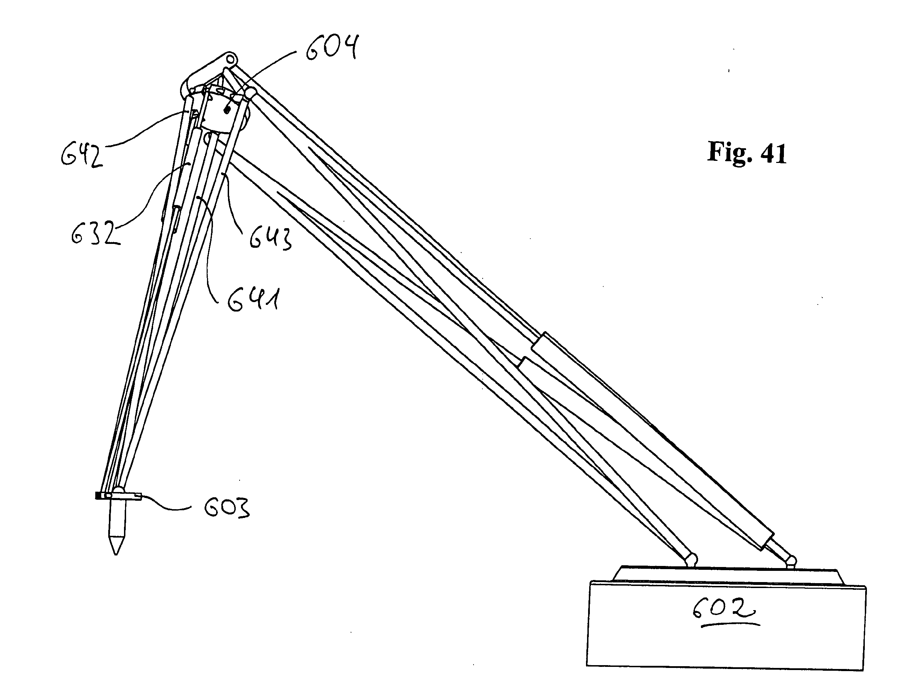

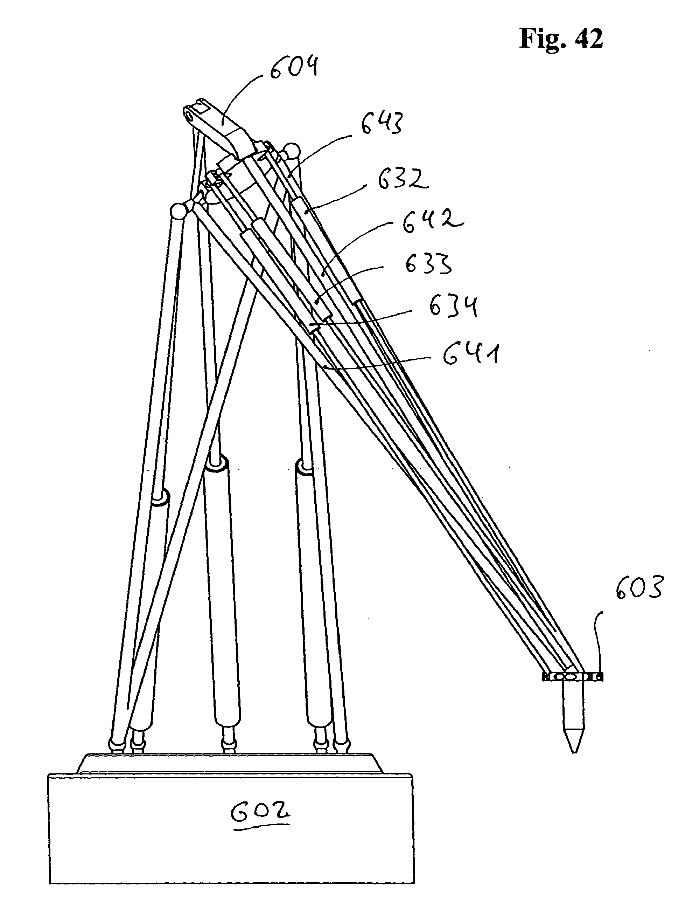

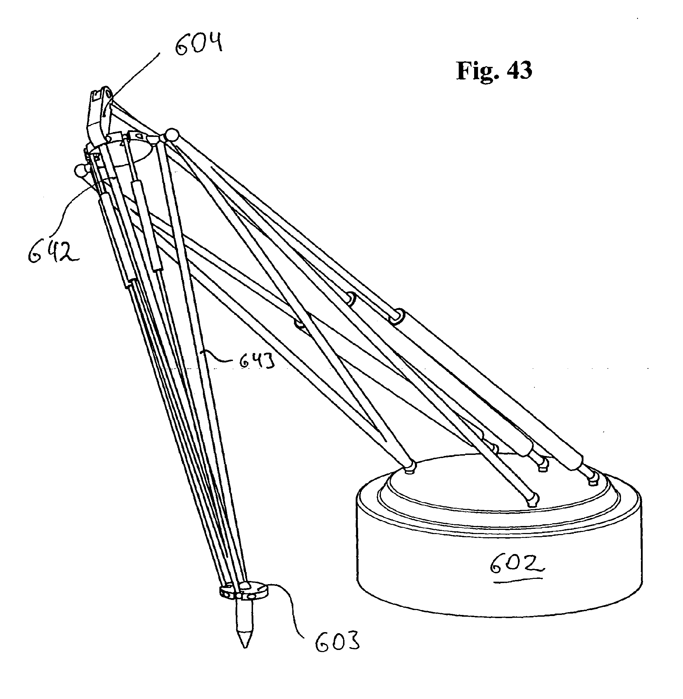

Die Fig. 38 bis 48 zeigen eine sechste Variante eines Knickarmes mit besonders flexiblem zweitem Kinematikteil 606. Der grundsätzliche Aufbau ist folgender: Die erste Parallelkinematik 605 ist so aufgebaut wie beim vorherigen Beispiel und bedarf daher keiner weiteren Erwähnung. Die Zwischenplattform 604 ist bei der in diesen Figuren gezeigten Variante gegenüber den bisher dargestellten Ausführungsformen verändert, sie weist eine Trägerplatte 635 auf, deren Aufgabe und Wirkung weiter unten erläutert wird. Die bewegliche Plattform 603 weist in diesem Ausführungsbeispiel ohne Beschränkung der Allgemeinheit ebenfalls Plattenform auf und dient als Werkzeugträger.

Die zweite Parallelkinematik 606 besteht bei diesem Ausführungsbeispiel aus drei passiven Stäben 641, 642 und 643 und drei Aktuatoren 632, 633 und 635. Die Bezugszeichen für diese sechs Verbindungselemente der Parallelkinematik 606 sind in den einzelnen Figuren nur nach Maßgabe ihrer Sichtbarkeit eingetragen, auf die rein schematische Art der Darstellung der Stäbe im Bereich der Doppelpunkte, Tripelpunkte und Pseudo-Tripelpunkte wird nochmals verwiesen.

Die drei passiven Stäbe 641, 642 und 643 bilden auf der beweglichen Plattform 603, bei der dargestellten Ausführungsform im Mittelpunkt der im wesentlichen kreisförmigen Werkzeugträgerscheibe, einen Tripelpunkt, die Aktuatoren 632 und 633 ein Zeigerpaar mit einem Doppelpunkt an der Peripherie der beweglichen Plattform 603. Der Aktuator 634 schließlich definiert mit seinem Angriffspunkt an der beweglichen Plattform 603 den letzten verbleibenden Freiheitsgrad und damit die Lage der beweglichen Plattform 603 im Raum bezüglich der Zwischenplattform 604.

Mit der Ausgestaltung der ersten Parallelkinematik 605 mit zwei Zeigerpaaren und einem Tripelpunkt liefert diese zweistufige Kombination zweier Parallelkinematiken ein äußerst mächtiges System zur Beherrschung der Lage und der Bewegung eines Werkzeugträgers, Greifarms etc. im Raum. Die Figuren zeigen deutlich, dass nicht nur die Reichweite des Knickarms hervorragend ist, sondern dass er auch in der Lage ist, unmittelbar im Bereich der festen Plattform 602, somit nahe seiner Basis, positioniert zu werden und dabei in allen diesen Bereichen auch die unterschiedlichsten Orientierungen der beweglichen Plattform 603 bewerkstelligen kann.

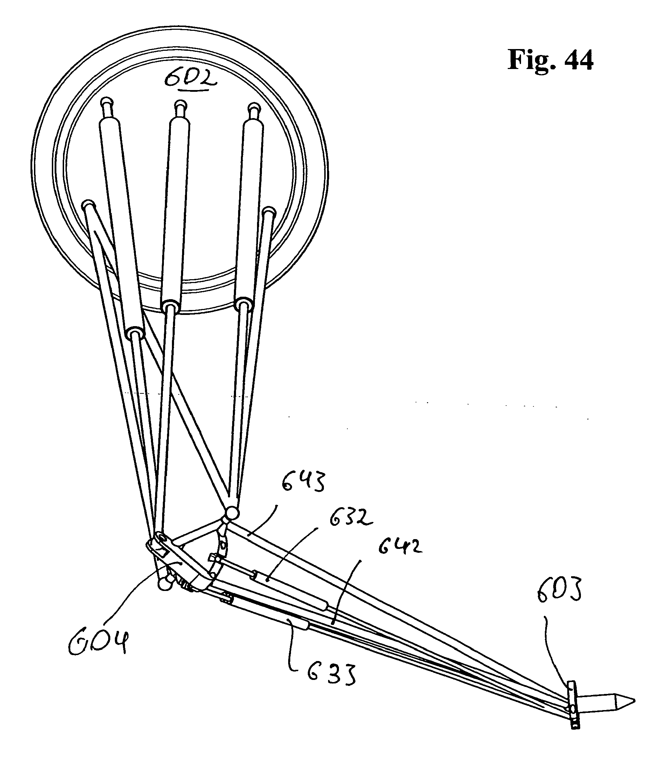

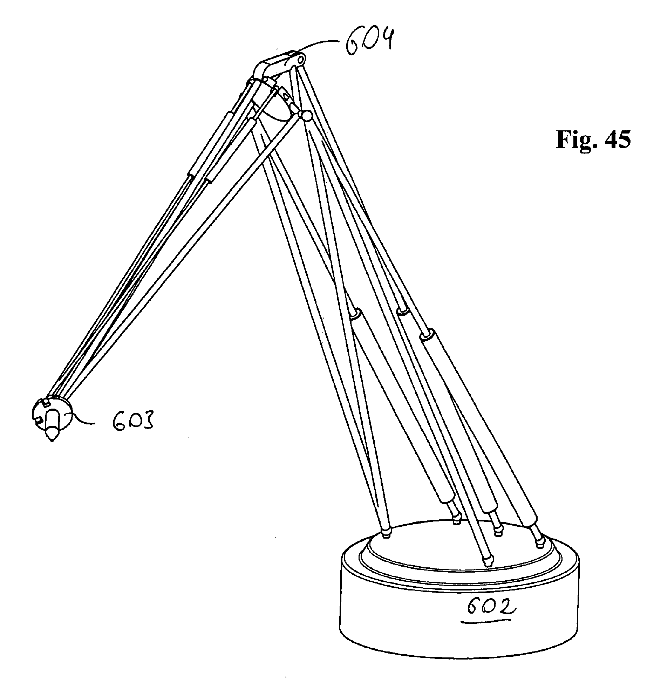

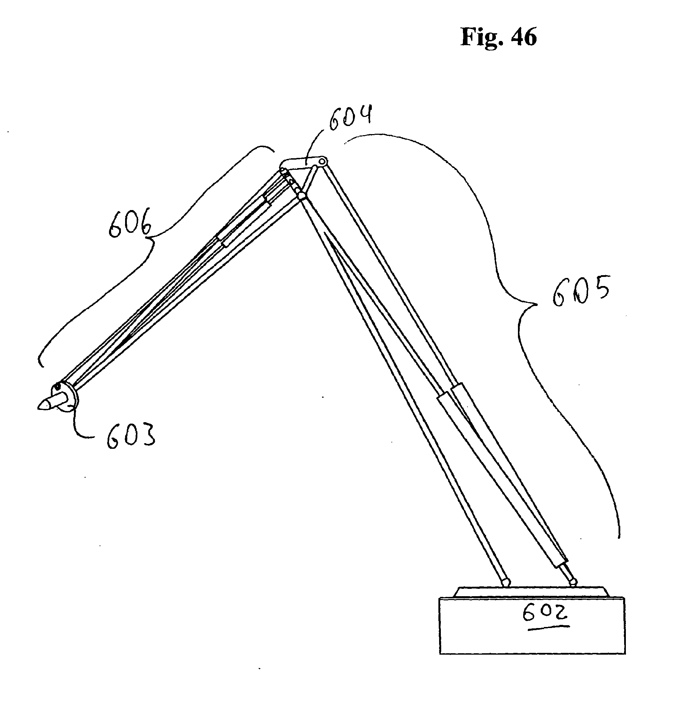

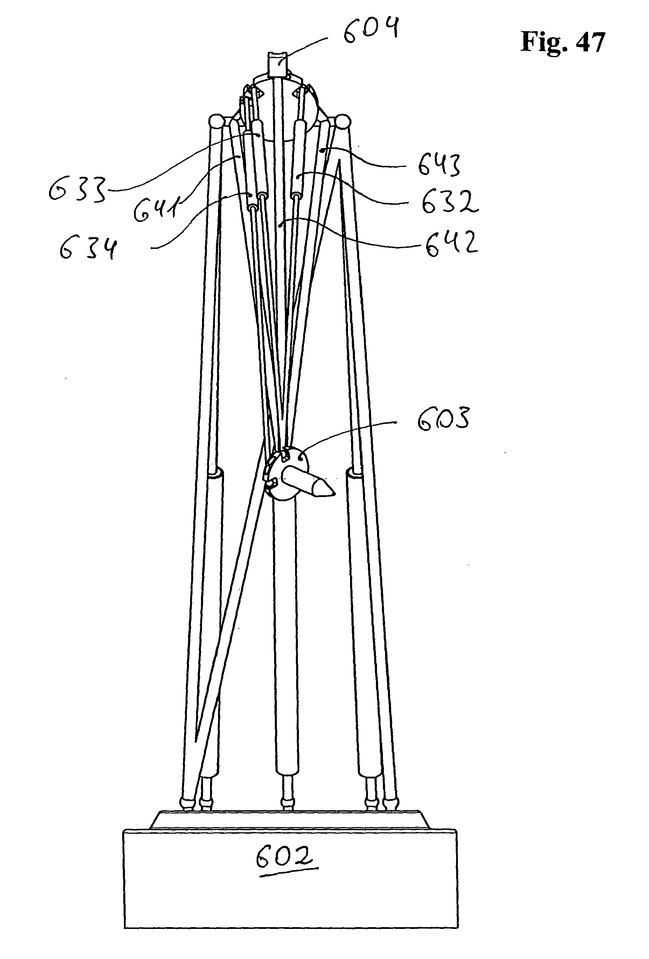

Die vielfältigen Möglichkeiten sind insbesondere aus Fig. 46 und 47 zu erkennen, wo man ersieht, dass selbst bei völlig symmetrischer Betätigung der ersten Parallelkinematik 605 ein deutliches Verschwenken der beweglichen Plattform 603 nur durch die zweite Parallelkinematik 606 möglich ist, und auch aus den Fig. 44 und 45, die in Draufsicht und perspektivischer Ansicht deutlich zeigen, dass auch bei stark ausgefahrenem und geknicktem Zustand die bewegliche Plattform 603 in eine Ebene normal zur Ebene der festen Plattform 602 gebracht werden kann.

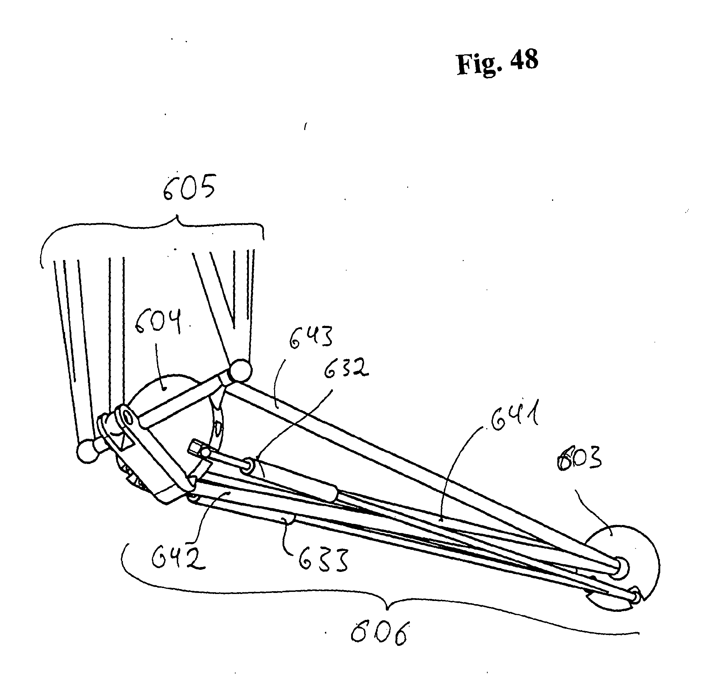

Die Fig. 48 zeigt den Abschnitt 606 der Parallelkinematik im vergrößerten Maßstab. Hier erkennt man deutlich das Zusammenlaufen der drei passiven Stäbe 641, 642 und 643 zu einem Tripelpunkt im Zentrum der scheibenförmigen, beweglichen Plattform 603 und das Zusammenlaufen der Aktuatoren 632, 633 zu einem Doppelpunkt an der Peripherie an der beweglichen Plattform 603. Der Aktuator 634 und sein Angriffspunkt sind bei dieser Ansicht verdeckt und befinden sich im wesentlichen hinter dem Aktuator 633.

Die Erfindung ist nicht auf die dargestellten Ausführungsbeispiele beschränkt, sondern kann verschiedentlich abgewandelt werden. So ist es möglich, nur einen der beiden Abschnitte des Knickarmes mit einer erfindungsgemäßen Kinematik zu versehen, es können auch bei zwei derartigen Kinematiken andere Längenverhältnisse der beiden Parallelkinematiken zueinander gewählt werden, dies hängt selbstverständlich vom jeweiligen Anwendungsgebiet ab. Es ist selbstverständlich, möglich die gezeigten Ausführungsbeispiele für die unterschiedlichen ersten und zweiten Parallelkinematiken anders als dargestellt miteinander zu kombinieren, in Kenntnis der Erfindung ist es für den Fachmann ein Leichtes, hier günstige Kombinationen zu finden.

Selbstverständlich kann die bewegliche Plattform 603 die für den jeweiligen Verwendungszweck angemessene Form aufweisen, das gleiche gilt für die feste Plattform 602, die nicht wirklich raumfest sein muss, sondern, es sei nochmals erwähnt, auch verfahrbar oder drehbar oder schwenkbar ausgebildet sein kann.

Es müssen auch nicht alle Verbindungsglieder der Parallelkinematiken Stäbe bzw. Aktuatoren sein, es ist durchaus möglich, dass einzelne diese Elemente durch Seile, Kette, Drähte etc. ersetzt werden, insbesondere wenn es sich um eine hängende Anordnung der Vorrichtung (Laufkatze, Hängebahn, etc.) handelt.

Die Mittelplattform ist in den dargestellten Ausführungsbeispielen mit Ausnahme des Letzten ein im wesentlichen tetraedisches Stabwerk, dies ist natürlich nicht notwendigerweise so, sondern nur wegen der leichteren kinematischen und dynamischen Beherrschbarkeit einer derartigen Konstruktion so dargestellt und gewählt worden.

## Patentansprüche

1. Gelenkarm (101, 201, 301, 401, 501, 601) bzw. Knickarm für Roboter, Hebezeuge, Kräne u.dgl., mit einer festen Plattform (102, 202, 302, 402, 502, 602), einer Zwischenplattform (104, 204, 304, 404, 504, 604) und einer beweglichen Plattform (103, 203, 403, 503, 603), mit einer ersten Kinematik (105, 205, 305, 405, 505, 605), die die feste Plattform mit der Zwischenplattform verbindet und mit einer zweiten Kinematik (106, 206, 306, 406, 506, 606), die die Zwischenplattform mit der beweglichen Plattform verbindet, **dadurch gekennzeichnet, dass** zumindest eine der beiden Kinematiken eine Parallelkinematik ist, und dass die Parallelkinematik als Verbindungselemente Aktuatoren: Stäbe veränderlicher Länge oder Stäbe konstanter Länge mit veränderlicher Lage ihres Fußpunktes, gegebenenfalls teilweise passive Stäbe: Stäbe konstanter Länge mit fest auf der festen Plattform angeordneten Fußpunkten, und gegebenenfalls Zugmittel: Seile, Ketten, etc., aufweist, und dass drei Verbindungselemente in Form eines Pseudo-Tripelpunktes (P3') an einem gemeinsamen Punkt der beweglichen Plattform (3) angreifen, wobei der Pseudo-Tripelpunkt einer der folgenden Definitionen genügt:
a) Es greift jedes der drei Verbindungselemente für sich nahe der Angriffspunkte der beiden anderen Verbindungselemente an der beweglichen Plattform an;
b) Es greifen zwei der Verbindungselemente nahe benachbart an der beweglichen Plattform an, das dritte Verbindungselement an einem der beiden Verbindungselemente nahe seines Angriffspunktes an der beweglichen Plattform;
c) Es greifen zwei der Verbindungselemente gemeinsam an einem Punkt der beweglichen Plattform an, das dritte Verbindungselement an einem der beiden Verbindungselemente nahe des Angriffspunktes an der beweglichen Plattform;
d) Es greift ein Verbindungselement an einem Punkt der beweglichen Plattform an, das zweite Verbindungselement an diesem Verbindungselement nahe dessen Angriffspunktes an der beweglichen Plattform und das dritte Verbindungselement am zweiten Verbindungselement nahe dessen Angriffspunktes am ersten Verbindungselement;
e) Es greift ein Verbindungselement an einem Punkt der beweglichen Plattform an, das zweite Verbindungselement an diesem Verbindungselement nahe dessen Angriffspunktes an der beweglichen Plattform und das dritte Verbindungselement am ersten Verbindungselement nahe des Angriffspunktes des zweiten Verbindungselements;
f) Es greifen alle drei Verbindungselemente an einem Punkt der beweglichen Plattform an.

2. Gelenkarm nach Anspruch 1, **dadurch gekennzeichnet, dass** beide kinematischen Verbindungen Parallelkinematiken sind, und dass die Zwischenplattform (104, 204, 304, 404, 504, 604) die bewegliche Plattform der ersten Kinematik (105, 205, 305, 405, 505, 605) ist und auch die feste Plattform der zweiten Kinematik (106, 206, 306, 406, 506, 606) bildet.

3. Gelenkarm nach Anspruch 1, **dadurch gekennzeichnet, dass** ein länglicher Arm (506, 706) fest mit der beweglichen Plattform (504, 703) verbunden ist, an dessen Ende ein Werkzeugträger (531, 707) um zumindest eine Achse (503, 710') verdrehbar angeordnet ist.

4. Gelenkarm nach Anspruch 3, **dadurch gekennzeichnet, dass** die Länge des Arms (506, 706) zwischen dem geometrischen Schwerpunkt der Kopfpunkte der Parallelkinematik (505, 701) und der Drehachse (503, 710') zumindest halb so groß ist wie der kleinste Abstand zwischen dem geometrischen Schwerpunkt der Kopfpunkte und dem geometrischen Schwerpunkt der Fußpunkte der Parallelkinematik (505, 701).

5. Gelenkarm nach Anspruch 4, **dadurch gekennzeichnet, dass** die Länge des Arms (506, 706) zwischen dem geometrischen Schwerpunkt der Kopfpunkte der Parallelkinematik (505, 701) und der Drehachse (503, 710') zumindest so groß ist wie der geringste Abstand zwischen dem Schwerpunkt der Kopfpunkte und dem Schwerpunkt der Fußpunkte der Parallelkinematik (505, 701).

6. Gelenkarm nach einem der Ansprüche 3 bis 5, **dadurch gekennzeichnet, dass** die Drehachse (503, 710') im wesentlichen normal zur Armachse (506, 706') verläuft.

7. Gelenkarm nach einem der Ansprüche 3 bis 6, **dadurch gekennzeichnet, dass** zwischen dem Arm (706) und dem Werkzeugträger (707) mehrere, zueinander parallele Achsen (709') vorgesehen sind.

8. Gelenkarm nach einem der Ansprüche 3 bis 6, **dadurch gekennzeichnet, dass** die Drehachse (503) in Verbindung mit einer sie schneidenden und zu ihr im Wesentlichen normal verlaufenden Achse eine kardanische Aufhängung für den Werkzeugträger (531) bildet.

9. Gelenkarm nach einem der Ansprüche 3 bis 8, **dadurch gekennzeichnet, dass** der Arm (706) im wesentlichen zylindrische Form mit einer Achse (706') aufweist, und dass die Achse (710') auf einem um die Achse (706') rotierbaren Bauteil angeordnet ist.

10. Gelenkarm nach einem der Ansprüche 1 bis 9, **dadurch gekennzeichnet, dass** der größte Abstand zwischen den Angriffspunkten der den Pseudo-Tripelpunkt bildenden Verbindungselemente kleiner ist als 20 % der kürzesten Länge des kürzesten am Pseudo-Tripelpunkt angreifenden Verbindungselementes.

11. Gelenkarm nach Anspruch 10, **dadurch gekennzeichnet, dass** der größte Abstand zwischen den Angriffspunkten der den Pseudo-Tripelpunkt bildenden Verbindungselement kleiner ist als 10 % der kürzesten Länge des kürzesten am Pseudo-Tripelpunkt angreifenden Verbindungselementes.
